(19) **Europäisches Patentamt / European Patent Office / Office européen des brevets**

(11) **EP 4 737 418 A1**

(12) **EUROPEAN PATENT APPLICATION**
published in accordance with Art. 153(4) EPC

(43) Date of publication:
06.05.2026 Bulletin 2026/19

(21) Application number: 24831695.2

(22) Date of filing: 13.06.2024

(51) International Patent Classification (IPC):
$C03C\ 23/00^{(2006.01)}$    $C03C\ 15/00^{(2006.01)}$
$C03C\ 17/34^{(2006.01)}$    $C03C\ 19/00^{(2006.01)}$
$C03C\ 21/00^{(2006.01)}$    $G02B\ 5/02^{(2006.01)}$
$G09F\ 9/00^{(2006.01)}$

(52) Cooperative Patent Classification (CPC):
C03C 15/00; C03C 17/34; C03C 19/00;
C03C 21/00; C03C 23/00; G02B 5/02; G09F 9/00

(86) International application number:
PCT/JP2024/021528

(87) International publication number:
WO 2025/004830 (02.01.2025 Gazette 2025/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 28.06.2023 JP 2023106110

(71) Applicant: AGC INC.
Chiyoda-ku,
Tokyo 1008405 (JP)

(72) Inventors:
• TAMADA Minoru
Tokyo 100-8405 (JP)
• INOUE Aichi
Tokyo 100-8405 (JP)

(74) Representative: Müller-Boré & Partner
Patentanwälte PartG mbB
Friedenheimer Brücke 21
80639 München (DE)

(54) **GLASS PLATE AND METHOD FOR PRODUCING SAME, IN-VEHICLE DISPLAY DEVICE, AND METHOD FOR SELECTING GLASS PLATE**

(57) The present invention relates to a glass plate having a first main surface and a second main surface facing the first main surface, wherein the first main surface has an uneven structure on at least a portion thereof, the visibility index value T on the outermost surface of the region having the uneven structure on the first main surface side is 0.85 or more, the glare index value S is 0.80 or more, the average dynamic friction coefficient COF is 0.50 or less, the friction change amount delta is more than -0.210, and the lightness L* value is 4.7 or less.

EP 4 737 418 A1

**Description**

TECHNICAL FIELD

The present invention relates to a glass plate, a method for producing the same, an in-vehicle display device, and a method for selecting a glass plate.

BACKGROUND ART

In general, a cover composed of a transparent substrate such as a glass plate is disposed on a display surface side of a display device such as a liquid crystal display (LCD) device in order to protect the display device.

However, in the case where such a transparent substrate is provided in the display device, when a display image on the display device is visually recognized through the transparent substrate, reflected glare of an object placed in the periphery may often occur. When such reflected glare occurs on the transparent substrate, a viewer of the display image may find it difficult to visually recognize the display image and furthermore may receive an unpleasant impression. In particular, in a cover glass of an in-vehicle display device, a distance between a driver and the display device is fixed. Therefore, when a strong light source such as sunlight is reflected, it becomes very difficult to visually recognize the display image, and necessary information cannot be read, which is likely to hinder driving.

Therefore, in order to prevent such reflected glare, for example, a method of performing an antiglare treatment of forming an uneven shape on a surface of the transparent substrate has been adopted.

With respect to this, Patent Literature 1 discloses a method of evaluating reflected glare in a display device by using a special device. However, optical properties required for the cover glass or the like in the in-vehicle display device are not limited to reduction of the reflected glare. That is, the cover glass in the in-vehicle display device is required to have optical properties at predetermined levels in terms of resolution or clarity, reflection image diffusiveness, anti-sparkle, and the like. Therefore, when selecting a transparent substrate such as a glass plate, it is insufficient to consider only one of the optical properties, and it is often necessary to consider a plurality of optical properties at the same time.

Therefore, Patent Literature 2 discloses that when evaluation is performed by using three index values of a resolution index value T, a reflection image diffusiveness index value R, and an anti-sparkle index value S, once these index values satisfy specific ranges, a glass plate having resolution, reflection image diffusiveness, and anti-sparkle prevention properties suitable for an in-vehicle display device can be obtained.

In addition, Patent Literature 3 discloses that when a transmission haze satisfies a specific range in addition to a clarity index value T, a reflection image diffusiveness index value R, and an anti-sparkle index value S, a glass plate also having excellent color reproducibility can be obtained.

CITATION LIST

PATENT LITERATURE

Patent Literature 1: JP 2007-147343A
Patent Literature 2: JP 5867649B
Patent Literature 3: JP 7067077B

SUMMARY OF INVENTION

TECHNICAL PROBLEM

With respect to the above, the cover glass or the like in the in-vehicle display device is not only used for visual recognition but also for touching as a touch panel, and the opportunity is expected to increase in the future.

As an index for evaluating a sense of touch in the touch panel, for example, as disclosed in Non-Patent Literature 1, an arithmetic average roughness or a dynamic friction coefficient is used.

However, according to the studies of the present inventors, it is found that the above arithmetic average roughness or dynamic friction coefficient alone is insufficient as index for an actual sense of touch. Therefore, the present inventors have particularly focused on a swipe operation and have studied a new method for quantitatively evaluating the sense of touch.

Accordingly, an object of the present invention is to provide a glass plate having an excellent sense of touch during a swipe operation while maintaining suitable clarity, and a method for producing the same. Another object of the present invention is to provide an in-vehicle display device using the above glass plate and a method for selecting the above glass plate.

SOLUTION TO PROBLEM

As a result of intensive studies on the above problems, the present inventors have conceived that, during the swipe operation, in addition to a dynamic friction coefficient, a friction change at an end portion when the swipe is stopped is important, and have completed the present invention. In addition, they found the fact that the shape of the outermost surface of the glass plate is important in order to realize a desired friction change, and found a method for realizing the shape.

That is, the present invention relates to the following [1] to [19].

[1] A glass plate including:

a first main surface; and
a second main surface opposite to the first main surface, in which
the first main surface has an uneven structure in at least a part thereof,
on an outermost surface of a region having the uneven structure on a first main surface side, the glass plate has a clarity index value T of 0.85 or more, an anti-sparkle index value S of 0.80 or more, an average dynamic friction coefficient COF of 0.50 or less, and a friction change amount delta of more than -0.210,
the glass plate has a brightness $L^*$ value of 4.7 or less in a specular component exclude (SCE) method, as measured by using a method in accordance with ASTM E313-73 standard, and
the clarity index value T, the anti-sparkle index value S, the average dynamic friction coefficient COF, and the friction change amount delta are quantified by methods shown below:

clarity index value T: SMS-1000 manufactured by DM&S is used, the glass plate is provided at a position 30 mm away from above a slit-shaped white light source with a length of 40 mm and a width of 0.1 mm such that the first main surface side is a light source side, and luminance on the outermost surface of the region having the uneven structure is measured from a second main surface side of the glass plate, a camera lens used is a lens having a focal distance of 16 mm at a diaphragm of 5.6, and a distance from the outermost surface of the glass plate on the first main surface side to the camera lens is set to 550 mm, and when a direction parallel to a thickness direction of the glass plate is defined as an angle $\theta = 0°$, an average value of luminance in a range of the angle $\theta = 0° \pm 0.1°$ is defined as $T_1$, an average value of luminance in a range of the angle $\theta = 0.7° \pm 0.1°$ is defined as $T_2$, and an average value of luminance in a range of the angle $\theta = -0.7° \pm 0.1°$ is defined as $T_3$, a value calculated according to the following equation (1) is defined as the clarity index value T,

$$\text{Clarity index value } T = 1 - (T_2 + T_3)/(2 \times T_1) \qquad \text{Equation (1)}$$

anti-sparkle index value S: the glass plate is disposed on a display surface side of a display device having a resolution of 264 ppi such that the second main surface is in contact with the display surface side, a sparkle value on the outermost surface of the region having the uneven structure is defined as an anti-sparkle $S_a$, where the sparkle value is determined by image analysis using SMS-1000 manufactured by DM&S provided on the first main surface side of the glass plate in a state where a green monochromatic image composed of RGB (0, 255, 0) is displayed on the display device, a distance d between the SMS-1000 manufactured by DM&S and the outermost surface of the glass plate on the first main surface side is set to 540 mm, and a camera lens used is a lens having a focal distance of 50 mm at a diaphragm of 5.6, in addition, a glass substrate (VRD140 glass, manufactured by AGC Glass Europe) having the same thickness as the glass plate, as a reference sample, is also subjected to image analysis under the same conditions, and the determined sparkle value is defined as an anti-sparkle $S_s$, and a value calculated based on the values of $S_a$ and $S_s$ according to the following equation (2) is defined as the anti-sparkle index value S,

$$\text{Anti-sparkle index value } S = 1 - (S_a/S_s) \qquad \text{Equation (2)}$$

average dynamic friction coefficient COF and friction change amount delta: a dynamic friction coefficient is measured by sliding a pseudo finger at a scanning distance of 50 mm, a load of 100 g, and a scanning speed of 100 mm/sec on the outermost surface of the region having the uneven structure on the first main surface side of the glass plate in an environment of a room temperature of 23°C and a humidity of 21 % in a static and dynamic friction measuring machine, a data acquisition frequency is set to 1 kHz, the pseudo finger is made of urethane, and a contact portion with the outermost surface is formed with linear convex portions in a direction perpendicular to a sliding direction at an interval of 0.5 mm in an area of 10 mm × 15 mm, and here, when going back from a time at which the dynamic friction coefficient is at maximum, a time point at which the dynamic friction coefficient is 0 or less for the first time is defined as a movement start time point, and a time point at which the dynamic friction coefficient is 5 or less for the first time after a time point represented by {(the movement start time point) + (0.75 × the scanning distance/the scanning speed)} is defined as a movement end time point, a value calculated according to the following equation (3) is defined as the average dynamic friction coefficient COF, and a value calculated according to the following equation (4) is defined as the friction change amount delta.

Average dynamic friction coefficient COF = average value of dynamic friction coefficients at (intermediate time point between the movement start time point and the movement end time point) ± 0.2 seconds Equation (3)          Equation (3)

Friction change amount delta = (maximum dynamic friction coefficient after the movement end time point) - (the average dynamic friction coefficient COF) Equation (4)          Equation (4)

[2] The glass plate according to the above [1], in which

the first main surface further includes an antireflection film on at least a part thereof,
the antireflection film covers at least a part of the uneven structure,
the glass plate has a luminous transmittance of 20% to 85% measured on an outermost surface of a region having the antireflection film on the first main surface side,
the glass plate has a b* value of 5 or less in the region having the antireflection film in a transmitted color under a D65 light source, as measured in accordance with JIS Z 8729 (2004),
the glass plate has a luminous reflectance of 1% or less measured on the outermost surface of the region having the antireflection film covering the uneven structure on the first main surface side, and
the antireflection film has a sheet resistance of $10^4$ Ω/□ or more.

[3] The glass plate according to the above [2], in which the glass plate has, on an outermost surface of a region having the uneven structure and the antireflection film on the first main surface side, a transmission haze of 15% or more, as measured by a method in accordance with JIS K 7136 (2000).

[4] The glass plate according to the above [2] or [3], in which

the antireflection film has a laminated structure in which two or more dielectric layers having different refractive indices are alternately laminated,
a main component of each of the dielectric layers in the laminated structure is an oxide of at least one selected from the group consisting of Si, Nb, Ti, Zr, Ta, Al, Sn, and In, or a nitride of at least one of Si or Al, and
in at least one of the dielectric layers, fine particles of at least one selected from the group consisting of Ag, Mo, W, Cu, Au, Pd, Pt, Ir, Ni, Co, Fe, Cr, C, TiC, SiC, TiN, and CrN are dispersed.

[5] The glass plate according to any one of the above [2] to [4], in which

the antireflection film has a laminated structure in which two or more layers having different refractive indexes are alternately laminated,
a main component of at least one layer of the layers in the laminated structure is an oxide of Si,
a main component of at least another layer of the layers in the laminated structure is a mixed oxide containing an oxide of at least one selected from a group A consisting of Mo and W and an oxide of at least one selected from a group B consisting of Si, Nb, Ti, Zr, Ta, Al, Sn, and In, and
a content of elements in the group B is less than 50 mass% with respect to a total of elements in the group A and the elements in the group B in the mixed oxide.

[6] The glass plate according to any one of the above [2] to [5], in which the glass plate has, on an outermost surface of a region having the uneven structure and the antireflection film on the first main surface side, a roughness curve element average length Rsm of less than 26 μm, an arithmetic average roughness Ra of 0.12 μm or more, a skewness Rsk of -1 to 1, and a kurtosis Rku of 2 to 4, among surface roughness.

[7] The glass plate according to the above [1], in which the glass plate has, on the outermost surface of the region having the uneven structure on the first main surface side, a transmission haze of less than 15%, as measured by a method in accordance with JIS K 7136 (2000).

[8] The glass plate according to the above [1] or [7], in which the glass plate has, on the outermost surface of the region having the uneven structure on the first main surface side, a roughness curve element average length Rsm of 26 $\mu$m or more, a skewness Rsk of -4 to -1.5, and a kurtosis Rku of 5 to 20, among surface roughness.

[9] The glass plate according to the above [1], [7], or [8], in which

the first main surface further includes an antireflection film on at least a part thereof,
the antireflection film covers at least a part of the uneven structure,
the antireflection film has a laminated structure in which two or more layers of a low refractive index layer and a high refractive index layer are alternately laminated, and
a main component of the high refractive index layer is at least one selected from the group consisting of SiN, TiO$_2$, Nb$_2$O$_5$, Ta$_2$O$_5$, and ZrO$_2$.

[10] The glass plate according to any one of the above [1] to [9], further including: a printed layer on at least a part of the second main surface.

[11] The glass plate according to any one of the above [1] to [10], in which the glass plate is a chemically strengthened glass.

[12] The glass plate according to any one of the above [1] to [11], which is for use in a cover glass of an in-vehicle display device.

[13] An in-vehicle display device including: a cover glass made of the glass plate according to the above [12]; and a display panel.

[14] A method for producing the glass plate according to any one of the above [1] to [12],

the glass plate having the first main surface and the second main surface opposite to the first main surface, and
the method including forming the uneven structure on at least a part of the first main surface.

[15] The method for producing the glass plate according to the above [14], in which

formation of the uneven structure includes immersing the glass plate in a solution containing potassium fluoride and hydrogen fluoride and then immersing the glass plate in a solution containing hydrogen fluoride, and
the method further includes forming an antireflection film to cover at least a part of the uneven structure.

[16] The method for producing the glass plate according to the above [14], in which formation of the uneven structure includes spraying a slurry onto the first main surface of the glass plate to roughen the first main surface, and then immersing the glass plate in a solution containing hydrogen fluoride to etch the glass plate.

[17] The method for producing the glass plate according to the above [16], in which a spray angle of the slurry is 70° or less with respect to the first main surface.

[18] The method for producing the glass plate according to the above [16] or [17], in which

formation of the uneven structure includes immersing the glass plate in a solution containing potassium fluoride and hydrogen fluoride and then immersing the glass plate in the solution containing hydrogen fluoride, and
the method further includes forming an antireflection film to cover at least a part of the uneven structure.

[19] A method including selecting the glass plate according to any one of the above [1] to [12].

ADVANTAGEOUS EFFECTS OF INVENTION

According to the present invention, it is possible to provide a glass plate having an excellent sense of touch during a swipe operation while maintaining suitable clarity, and a method for producing the same. It is also possible to provide an in-vehicle display device using the above glass plate and a method for selecting the above glass plate.

BRIEF DESCRIPTION OF DRAWINGS

[FIG. 1] FIG. 1 is a schematic diagram illustrating an example of a measurement device used for measuring a clarity index value T.

[FIG. 2] FIG. 2 is a schematic diagram illustrating an example of a measurement device used for measuring an anti-sparkle index value S.

[FIG. 3] FIG. 3 is a schematic diagram illustrating an example of a measurement device used for measuring a reflection image diffusiveness index value R.

DESCRIPTION OF EMBODIMENTS

Hereinafter, the present invention will be described in detail. Note that, in the present description, "to" indicating a numerical range is used in the sense of including the numerical values set forth before and after "to" as a lower limit value and an upper limit value.

<<Glass Plate>>

The glass plate according to the present invention has a first main surface and a second main surface opposite to the first main surface, and the first main surface has an uneven structure in at least a part thereof.

The glass plate has a clarity index value T of 0.85 or more and an anti-sparkle index value S of 0.80 or more on the outermost surface of the region having the uneven structure on the first main surface side. In addition, the glass plate has an average dynamic friction coefficient COF of 0.50 or less and a friction change amount delta of more than -0.210 on the outermost surface.

Further, the glass plate has a brightness L* value of 4.7 or less in a specular component exclude (SCE) method, as measured by using the method in accordance with ASTM E313-73 standard.

<Average Dynamic Friction Coefficient COF and Friction Change Amount Delta>

The glass plate according to the present embodiment has an average dynamic friction coefficient COF of 0.50 or less and a friction change amount delta of more than -0.210 on the outermost surface of the region having the uneven structure on the first main surface side.

Here, the average dynamic friction coefficient COF and the friction change amount delta are values derived by the following measurement methods. Note that, as the average dynamic friction coefficient COF and the friction change amount delta in the present description, an average value obtained by measuring at arbitrary three points on a diagonal line is preferably used. However, as the arbitrary measurement point, a point having an extreme outlier is excluded.

(Measurement Method)

A dynamic friction coefficient is measured by sliding a pseudo finger at a scanning distance of 50 mm, a load of 100 g, and a speed of 100 mm/sec on the outermost surface of the region having the uneven structure on the first main surface side of the glass plate in an environment of a room temperature of 23°C and a humidity of 21% in a static and dynamic friction measuring machine. Data acquisition frequency is set to 1 kHz.

The pseudo finger is made of urethane, and a contact portion with the outermost surface of the glass plate is formed with linear convex portions in a direction perpendicular to a sliding direction at an interval of 0.5 mm in an area of 10 mm × 15 mm.

Here, when going back from a time at which the dynamic friction coefficient is at maximum, a time point at which the dynamic friction coefficient is 0 or less for the first time is defined as a movement start time point, and a time point at which the dynamic friction coefficient is 5 or less for the first time after a time point represented by {(the movement start time point) + (0.75 × the scanning distance/the scanning speed)} is defined as a movement end time point. A value calculated according to the following equation (3) is defined as the average dynamic friction coefficient COF, and a value calculated according to the following equation (4) is defined as the friction change amount delta.

Average dynamic friction coefficient COF = average value of dynamic friction coefficients at (intermediate time point between the movement start time point and the movement end time point) ± 0.2 seconds        Equation (3) Friction change amount delta = (maximum dynamic friction coefficient after the movement end time point) - (the average dynamic friction coefficient COF)        Equation (4)

Note that, the scanning distance and the scanning speed in the equation for determining the movement end time point are 50 mm and 100 mm/sec, respectively, as described as sliding conditions for the pseudo finger.

The average dynamic friction coefficient COF is effective for evaluating finger sliding during a swipe operation on a surface of the glass plate, that is, a smoothness sensation.

The average dynamic friction coefficient COF is 0.50 or less, and preferably 0.10 to 0.50. Here, the average dynamic friction coefficient COF is 0.50 or less, preferably 0.45 or less, more preferably 0.40 or less, and still more preferably 0.35 or less, from the viewpoint of smoothing the finger sliding during the swipe operation. On the other hand, the average dynamic friction coefficient COF is not particularly limited in lower limit, and is preferably 0.10 or more, more preferably 0.15 or more, and still more preferably 0.20 or more, from the viewpoint of giving a user a swipe operation feeling.

In addition, as a result of the studies, the present inventors have found that a floating sensation, which refers to, for example, a weak feeling of the finger stopping at the end of the swipe operation on the surface of the glass plate, correlates with the friction change amount delta, and that it is effective if the value of the friction change amount delta is a certain value or more.

The friction change amount delta is more than -0.210, and preferably more than -0.210 and -0.01 or less. Here, the friction change amount delta is more than -0.210, preferably -0.205 or more, more preferably -0.200 or more, still more preferably -0.15 or more, and further more preferably -0.10 or more, from the viewpoint of preventing a feeling that the finger is stuck at the end of the swipe operation and realizing a smooth finger release sensation. On the other hand, the friction change amount delta is not particularly limited in upper limit, and is preferably -0.01 or less, more preferably -0.02 or less, and still more preferably -0.03 or less, from the viewpoint of giving the user an operational feeling of having completed a swipe.

More specifically, the average dynamic friction coefficient COF and the friction change amount delta are preferably the following combinations.

    (i) The average dynamic friction coefficient COF is 0.35 or less, and the friction change amount delta is -0.200 or more.
    (ii) The average dynamic friction coefficient COF is 0.40 or less, and the friction change amount delta is -0.100 or more.

In a further preferred aspect of the combination, preferred upper and lower limit values of each of the above average dynamic friction coefficient COF and friction change amount delta can be adopted.

In order for the average dynamic friction coefficient COF and the friction change amount delta to satisfy the above ranges, for example, a shape of the uneven structure on the first main surface side of the glass plate is set to a predetermined range.

For example, in the case where convex portions in the uneven structure on the surface are pointed, the contact with the finger of the user is a contact at a plurality of discrete points, so that the dynamic friction coefficient decreases and the smoothness sensation during the swipe operation is improved.

On the other hand, in the case where the uneven structure on the surface is made fine to shorten the cycle of the unevenness and a large number of concave and convex portions are formed, it is possible to increase the friction change at the end of the swipe operation, and to realize a smooth finger release sensation.

Note that, even in the case where an antireflection film, an anti finger print film, or the like is formed to cover the uneven structure, the surface structure of the antireflection film or the anti finger print film follows the uneven structure. Therefore, when the shape of the uneven structure is set within a predetermined range, the uneven shape of the outermost surface of the glass plate can be controlled.

A specific example of the uneven shape on the outermost surface of the glass plate for satisfying the desired ranges of the average dynamic friction coefficient COF and the friction change amount delta will be described later.

<Clarity Index Value T>

The clarity in the present embodiment represents a degree to which an image matches a display image when the display image is visually recognized through a glass plate. It has been confirmed that this correlates with the determination result of clarity (resolution) based on an observer's visual observation and exhibits behavior similar to human vision.

For example, a glass plate exhibiting a small clarity index value T (close to 0) has poor clarity, and conversely, a glass plate exhibiting a large clarity index value T has good clarity. Therefore, the clarity index value T can be used as a quantitative index for determining the clarity of the glass plate.

The clarity index value T in the present embodiment is quantified by the following method. Note that, as the clarity index value T in the present description, an average value obtained by measurement at arbitrary three points on a diagonal line is preferably used. However, as the arbitrary measurement point, a point having an extreme outlier is excluded.

SMS-1000 manufactured by DM&S (Display-Messtechnik&Systeme) is used as an analysis device, and the glass plate is provided at a position 30 mm away from above a slit-shaped white light source having a length of 40 mm and a width of 0.1 mm such that the first main surface side is a light source side. Then, luminance on the outermost surface of the region having the uneven structure is measured from a second main surface side of the glass plate.

The camera lens used is a lens having a focal distance of 16 mm at a diaphragm of 5.6, and the distance from the outermost surface of the glass plate on the first main surface side to the camera lens is set to 550 mm.

When a direction parallel to a thickness direction of the glass plate is defined as an angle $\theta = 0°$, an average value of luminance in a range of the angle $\theta = 0° \pm 0.1°$ is defined as $T_1$, an average value of luminance in a range of the angle $\theta = 0.7° \pm 0.1°$ is defined as $T_2$, and an average value of luminance in a range of the angle $\theta = -0.7° \pm 0.1°$ is defined as $T_3$, the value calculated according to the following equation (1) is defined as the clarity index value T.

$$\text{Clarity index value } T = 1 - (T_2 + T_3)/(2 \times T_1) \qquad \text{Equation (1)}$$

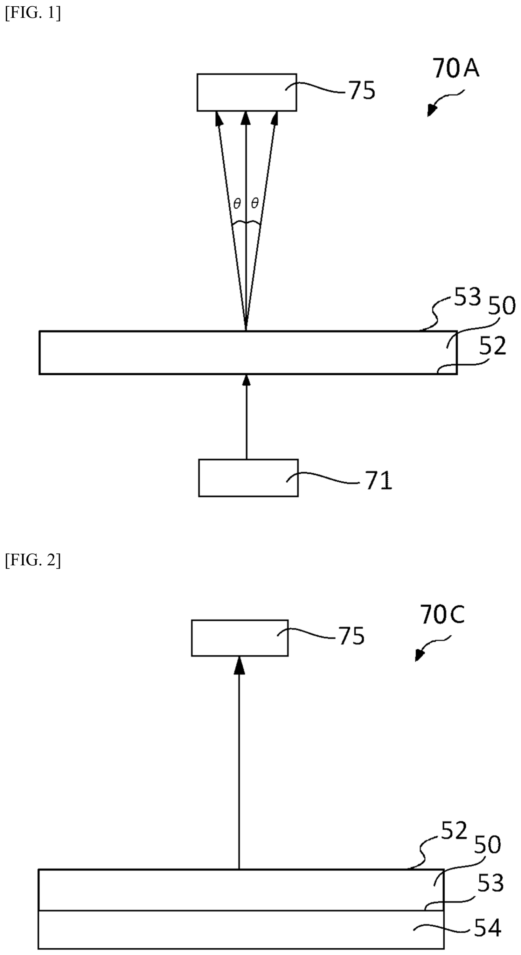

More specifically, one aspect of a method of measuring the clarity index value T of a glass plate 50 will be described with reference to FIG. 1.

A measurement device 70A includes a light source 71 and a detector (analysis device) 75, and a measurement target sample, that is, the glass plate 50, is disposed in the measurement device 70A. The glass plate 50 has a first main surface 52 having an uneven structure and a second main surface 53.

The light source 71 emits first light in a direction parallel to the thickness direction of the glass plate 50 from a first main surface 52 side toward the glass plate 50, and the detector (analysis device) 75 positioned on a second main surface 53 side of the glass plate 50 detects and analyzes luminance of transmitted light of the first light transmitted through the glass plate 50.

When the direction parallel to the thickness direction of the glass plate 50 is defined as the angle $\theta = 0°$, the clarity index value T of the glass plate 50 is calculated according to the above equation (1) based on the average value of luminance ($T_1$) detected in the range of the angle $\theta = 0° \pm 0.1°$, the average value of luminance ($T_2$) detected in the range of the angle $\theta = 0.7° \pm 0.1°$, and the average value of luminance ($T_3$) detected in the range of the angle $\theta = -0.7° \pm 0.1°$.

Note that, the minus (-) sign of the angle $\theta$ indicates that the transmitted light is inclined counterclockwise with respect to the incident first light, and the plus (+) sign indicates that the transmitted light is inclined clockwise with respect to the incident first light.

Note that, SMS-1000 manufactured by DM&S (Display-Messtechnik&Systeme) is used as the analysis device, but in the case where a subsequent device manufactured by DM&S in accordance with JIS C1006:2019 is available for the analysis device, the subsequent device may be used.

In addition, as the camera lens, for example, a C1614A lens (manufactured by Ricoh Inc.) can be adopted.

As one of optical properties of the glass plate according to the present embodiment, the clarity index value T on the outermost surface of the region having the uneven structure is 0.85 or more, preferably 0.86 or more, and more preferably 0.87 or more. A higher value is more preferred. An upper limit of the clarity index value T is 1.0.

The clarity index value T can be in a desired range depending on, for example, the shape and a density of the uneven structure.

<Anti-sparkle Index Value S>

The "anti-sparkle" in the present embodiment indicates a degree to which unevenness of bright spots is observed, which is caused when light (image) from the display image is scattered by the surface of the glass plate when the light is transmitted through the glass plate and the scattered light interferes with each other. It has been confirmed that this correlates with a determination result of the anti-sparkle by observer's visual observation and exhibits behavior similar to human vision. For example, a glass plate having a small anti-sparkle index value S tends to have a remarkable sparkle, and conversely, a glass plate having a large anti-sparkle index value S tends to have a reduced sparkle.

The anti-sparkle index value S in the present embodiment is quantified by the following method. Note that, as the anti-sparkle index value S in the present description, an average value obtained by measurement at arbitrary three points on a diagonal line is preferably used. However, as the arbitrary measurement point, a point having an extreme outlier is excluded.

The glass plate is disposed on a display surface side of a display device having a resolution of 264 ppi such that the second main surface is in contact with the display surface side. A sparkle value on the outermost surface of the region having the uneven structure is defined as an anti-sparkle $S_a$, where the sparkle value is determined by image analysis using SMS-1000 manufactured by DM&S provided on the first main surface side of the glass plate in a state where a green monochromatic image composed of RGB (0, 255, 0) is displayed on the display device.

The distance d between the SMS-1000 manufactured by DM&S and the outermost surface of the glass plate on the first main surface side is set to 540 mm, and a camera lens used is a lens having a focal distance of 50 mm at a diaphragm of 5.6.

A glass substrate (VRD140 glass, manufactured by AGC Glass Europe) having the same size as the glass plate, as a reference sample, is also subjected to image analysis under the same conditions, and the determined sparkle value is defined as an anti-sparkle $S_s$.

A value calculated based on the values of $S_a$ and $S_s$ according to the following equation (2) is defined as the anti-sparkle index value S.

$$\text{Anti-sparkle index value } S = 1 - (S_a/S_s) \qquad \text{Equation (2)}$$

Note that, in the case where the VRD140 glass as the glass substrate as a reference sample is not easily available, a glass substrate having a sparkle value of 0.270 to 0.290 is used as a reference sample.

Here, the reason why the display device is caused to display a green monochromatic image composed of RGB (0, 255, 0) is that this color has high visual sensitivity and is easy to visually recognize.

In addition, when the distance d = 540 mm between SMS-1000 manufactured by DM&S, which is a solid-state imaging element, and the outermost surface of the glass plate on the first main surface side is represented by a distance index r, it corresponds to r=10.8. The distance index r is represented by the following equation (2-1) using a focal distance f of the solid-state imaging element and the distance d between the solid-state imaging element and the glass plate.

Distance index r = (distance d between solid-state imaging element and glass plate)/(focal distance f of solid-state imaging element) Equation (2-1) $\qquad$ Equation (2-1)

More specifically, one aspect of a method of measuring the anti-sparkle index value S of the glass plate 50 will be described with reference to FIG. 2.

In a measurement device 70C, the detector 75 is disposed on a measurement target sample, i.e., the glass plate 50, on the first main surface 52 side of the glass plate 50, and a display device 54 having a resolution of 264 ppi is provided to be in contact with the second main surface 53 of the glass plate 50. Examples of the display device 54 include an LCD panel. The display device 54 is caused to display a green monochromatic image composed of RGB (0, 255, 0), and the image through the glass plate 50 is analyzed by using the detector (analysis device) 75. The sparkle value determined based on the image analysis result is defined as the anti-sparkle $S_a$.

The anti-sparkle index value S of the glass plate is calculated according to the above equation (2) based on the values of the anti-sparkle $S_a$ and the anti-sparkle $S_s$ determined under the same conditions for the glass substrate (VRD140 glass, manufactured by Asahi Glass Europe), as a reference sample, having the same thickness as that of the glass plate 50.

Note that, SMS-1000 manufactured by DM&S (Display-Messtechnik&Systeme) is used as the solid-state imaging element, but in the case where a subsequent device manufactured by DM&S in accordance with JIS C1006:2019 is available for the analysis device, the subsequent device may be used.

In addition, as the camera lens, for example, a 23FM50SP lens (manufactured by Tamron Co., Ltd.) can be adopted.

As one of the optical properties of the glass plate according to the present embodiment, the anti-sparkle index value S on the outermost surface of the region having the uneven structure is 0.80 or more, preferably 0.81 or more, and more preferably 0.82 or more. A higher value is more preferred since this improves the clarity of information displayed on a display. An upper limit of the anti-sparkle index value S is 1.0.

The anti-sparkle index value S can be in a desired range depending on, for example, the shape and the density of the uneven structure.

<Reflection Image Diffusiveness Index Value R>

An index of the optical properties of the glass plate according to the present embodiment includes a reflection image diffusiveness index value. The reflection image diffusiveness indicates a degree to which a reflection image of an object (for example, an illumination) placed around the glass plate matches the original object. It has been confirmed that this correlates with a determination result of antiglare properties by observer's visual observation and exhibits behavior similar to human vision.

For example, a glass plate exhibiting a small reflection image diffusiveness index value R (close to 0) has poor antiglare properties, and conversely, a glass plate exhibiting a large reflection image diffusiveness index value R (the closer to 1, the larger) has good antiglare properties.

The reflection image diffusiveness index value R is quantified by the following method. Note that, as the reflection image diffusiveness index value R in the present description, an average value obtained by measurement at arbitrary three points on a diagonal line is preferably used. However, as the arbitrary measurement point, a point having an extreme outlier is excluded.

By using SMS-1000 manufactured by DM&S, slit-shaped light having a width of 101 mm is emitted to the glass plate from the first main surface side, and luminance of the reflected light is measured. The camera lens used is a lens having a focal distance of 16 mm at a diaphragm of 5.6, the distance from the outermost surface of the glass plate on the first main surface side to the camera lens is set to 300 mm, and the imaging scale is set to a range of 0.0276 to 0.0278.

When a direction parallel to the thickness direction of the glass plate is defined as an angle $\varphi = 0°$ and light is emitted from an angle of angle $\varphi = 5.7° \pm 0.1°$, an angle in total reflection, that is, an angle $\varphi = -5.7°$ is defined as a reference (angle $\alpha = 0°$). When an average value of luminance of the reflected light in a range of the angle $\alpha = 0° \pm 0.1°$ is defined as $R_1$, an average value of luminance of the reflected light in a range of the angle $\alpha = 0.5° \pm 0.1°$ is defined as $R_2$, and an average value of luminance of the reflected light in a range of the angle $\alpha = -0.5° \pm 0.1°$ is defined as $R_3$, a value calculated according to the following equation (5) is defined as the reflection image diffusiveness index value R.

$$\text{Reflection image diffusiveness index value } R = (R_2+R_3)/(2\times R_1) \qquad \text{Equation (5)}$$

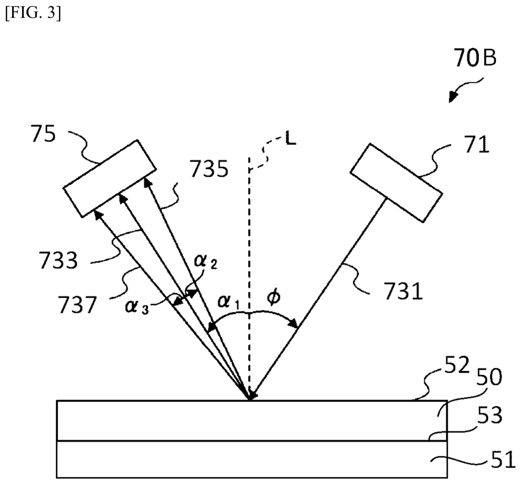

More specifically, one aspect of a method of measuring the reflection image diffusiveness index value R of the glass plate 50 will be described with reference to FIG. 3.

A measurement device 70B includes the light source 71 and the detector (analysis device) 75, and a measurement target sample, that is, the glass plate 50, is disposed in the measurement device 70B with the first main surface 52 facing the light source 71 and the detector 75. A black plate 51 is provided on the second main surface 53 side of the glass plate 50. The light source 71 emits slit-shaped second light 731 having a width of 101 mm toward the glass plate 50. The detector (analysis device) 75 receives reflected light, which is obtained by the light being reflected at a predetermined angle, from the first main surface 52, and analyzes luminance thereof.

During the measurement, the second light 731 is emitted from the light source 71 of the measurement device 70B toward the glass plate 50. When a direction parallel to a direction of a normal line L of the glass plate 50 (the thickness direction of the glass plate) is defined as an angle $\varphi = 0°$, the second light 731 is emitted to the glass plate 50 at an angle inclined 5.7° clockwise (indicated by $\varphi$ in FIG. 3). Note that, since an actual measurement includes an error, the angle $\varphi$ more accurately includes a range of $5.7° \pm 0.1°$.

Next, light specularly reflected (hereinafter, referred to as "first reflected light 733") among the light incident on the first main surface 52 of the glass plate 50 is detected by using the detector (analysis device) 75, and the average value of luminance $R_1$ is analyzed and calculated.

Note that, in practice, since the angle of the first reflected light 733 with respect to the normal line L is - (incident angle)°, it is $-5.7° \pm 0.1°$ (indicated by $\alpha_1$ in FIG. 3). The minus (-) sign indicates that the angle is inclined counterclockwise with respect to the normal line L, and the plus (+) sign indicates that the angle is inclined clockwise with respect to the normal line.

Here, when a direction inclined by -5.7° with respect to the normal line L is defined as a reference (angle $\alpha = 0°$), the first reflected light 733 is in a range of angle $\alpha = 0° \pm 0.1° (= \alpha_1)$.

Similarly, when the direction inclined by -5.7° with respect to the normal line L from the first main surface 52 of the glass plate 50 is defined as a reference (angle $\alpha = 0°$), the average value of luminance $R_2$ of reflected light obtained by the light being reflected at a second angle $\alpha_2$ represented by an angle $\alpha = 0.5° \pm 0.1°$ (hereinafter referred to as "second reflected light 735") and the average value of luminance $R_3$ of reflected light obtained by the light being reflected at a third angle $\alpha_3$ represented by an angle $\alpha = -0.5° \pm 0.1°$ (hereinafter referred to as "third reflected light 737") are measured.

The reflection image diffusiveness index value R of the glass plate 50 is calculated according to the above equation (5) using each obtained luminance $R_1$, $R_2$, and $R_3$.

Note that, SMS-1000 manufactured by DM&S (Display-Messtechnik&Systeme) is used as the analysis device, but in the case where a subsequent device manufactured by DM&S in accordance with JIS C1006:2019 is available for the analysis device, the subsequent device may be used.

In addition, as the camera lens, for example, a C1614A lens (manufactured by Ricoh Inc.) can be adopted.

As one of the optical properties of the glass plate according to the present embodiment, the reflection image diffusiveness index value R on the outermost surface of the region having the uneven structure is preferably 0.01 or more, more preferably 0.012 or more, and still more preferably 0.015 or more, from the viewpoint of grasping the information displayed on the display even in the presence of external light. On the other hand, the reflection image diffusiveness index value R is preferably 0.95 or less, more preferably 0.8 or less, and still more preferably 0.6 or less, from the viewpoint of preventing "whiteout" that the entire surface is invisible due to scattered light when exposed to very strong external light.

The reflection image diffusiveness index value R can be in a desired range depending on, for example, the shape and the density of the uneven structure.

<Brightness L* Value>

Even in the case where the glass plate satisfies the optical properties of the clarity index value T and the anti-sparkle index value S, the clarity is influenced when the glass plate itself is whitish. Therefore, the glass plate according to the present embodiment has a brightness L* value of 4.7 or less in a specular component exclude (SCE) method, as measured by using a method in accordance with ASTM E313-73 standard. Note that, as the brightness L* value in the present description, an average value obtained by measurement at arbitrary three points on a diagonal line is preferably used. However, as the arbitrary measurement point, a point having an extreme outlier is excluded.

In the case where the brightness L* value in the glass plate according to the present embodiment is 4.7 or less, the glass plate itself is not whitish, and good clarity can be realized. The brightness L* value is 4.7 or less, preferably 4.5 or less, and more preferably 4.3 or less, from the viewpoint of ensuring transparency of the glass plate. In addition, a lower limit is not particularly limited and is generally 0.01 or more.

The brightness L* value in the present embodiment is a value in the specular component exclude (SCE) method as measured by using a method in accordance with ASTM E313-73 standard, and regular reflected light is removed and only diffuse reflected light is subjected to measurement. A good match has been obtained between the brightness L* value and a result when a user visually evaluated whiteness of the glass plate in stages. Therefore, the brightness L* value in the L*a*b* color system measured in the SCE method can be regarded as an index of the whiteness of the glass plate.

The brightness L* value of the glass plate according to the present embodiment can be reduced by reducing a transmission haze value of the glass plate. In addition, it has been newly found that the brightness L* value can also be reduced by forming a specific absorption type antireflection film to cover the uneven structure provided on the first main surface side.

<First Embodiment and Second Embodiment>

The first main surface of the glass plate according to the present embodiment has an uneven structure in at least a part thereof. This uneven structure has as an antiglare (AG) function, and antiglare properties are imparted to the glass plate.

As a result of studies by the present inventors, for example, the following first embodiment and second embodiment have been conceived as one aspect of the glass plate according to the present embodiment.

· First Embodiment

In the first embodiment, the first main surface of the glass plate further includes an antireflection film on at least a part thereof, and the antireflection film covers at least a part of the uneven structure. Here, the glass plate has a luminous transmittance of 20% to 85% measured on the outermost surface of a region having the antireflection film on the first main surface side, and has a b* value of 5 or less in the same region in the transmitted color under a D65 light source, as measured in accordance with JIS Z 8729 (2004). In addition, the glass plate has a luminous reflectance of 1% or less measured on the outermost surface of the region having the antireflection film covering the uneven structure on the first main surface side, and the antireflection film has a sheet resistance of $10^4$ $\Omega/\square$ or more.

· · Antireflection Film

In the first embodiment, it is sufficient that the antireflection film covers at least a part of the uneven structure, and it is preferable that the antireflection film covers a region of the glass plate that is to be visually recognized and that is to be touched for a swipe operation or the like. In the case where the uneven structure is formed in all regions to be visually recognized and to be touched, the antireflection film is preferably formed in all the regions.

In general, by providing an antireflection film on a glass plate, an effect of reducing reflectance can be obtained, and dazzle due to reflected glare of light can be reduced. In the case where a glass plate having an antireflection film is used in a display device, a transmittance of light from the display device can be improved, and the clarity of the image display device can be improved.

In addition, it is found that, in the present embodiment, by providing an absorption type antireflection film to be described later, the brightness L* value of the glass plate can be reduced even in the case where the transmission haze to be described later is high. Note that, the influence of providing the antireflection film on the clarity index value T and the anti-sparkle index value S is extremely small. Therefore, even in the case where the antireflection film is formed, the values of the clarity index value T and the anti-sparkle index value S on the outermost surface of the region having the uneven structure in the glass plate after the formation of the antireflection film can be regarded as the same as the clarity index value T and the anti-sparkle index value S before the formation of the antireflection film.

The absorption type antireflection film has a laminated structure in which two or more dielectric layers having different refractive indices are alternately laminated. When the dielectric layers having different refractive indices are laminated, light reflection can be prevented.

In the absorption type antireflection film, a high refractive index layer and a low refractive index layer may be laminated in this order or the low refractive index layer and the high refractive index layer may be laminated in this order from a side close to the first main surface of the glass plate. In the case where the number of layers is three or more, it is not necessary for all layers to have different refractive indices.

For example, in the case of a three-layer laminated structure, a low refractive index layer, a high refractive index layer, and a low refractive index layer may be formed in this order, or a high refractive index layer, a low refractive index layer, and a high refractive index layer may be formed in this order from the side closer to the first main surface of the glass plate. Here, in the former case, the two low refractive index layers may have the same refractive index, and in the latter case, the two high refractive index layers may have the same refractive index. The same applies to the case where the number of layers is four or more.

Note that, in the present description, the high refractive index layer is, for example, a layer having a refractive index of 1.9 or more at a wavelength of 550 nm, and the low refractive index layer is a layer having a refractive index of 1.6 or less at a wavelength of 550 nm. In addition, a layer having a refractive index of 1.2 to 1.4 at a wavelength of 550 nm in which hollow particles or pores are mixed in a matrix of the layer may be included.

As a suitable aspect of the absorption type antireflection film, fine particles having a light absorption ability may be dispersed in the dielectric layer. As the fine particles having a light absorption ability, those having a high light absorption ability in the entire wavelength region of visible light are used.

In the present embodiment, in the case where fine particles having a high light absorption ability in the entire wavelength region of visible light are used as the fine particles dispersed in the dielectric layer, it is possible to more effectively prevent the transmitted light from being yellowish.

Specifically, the fine particles are preferably at least one selected from the group consisting of Ag, Mo, W, Cu, Au, Pd, Pt, Ir, Ni, Co, Fe, Cr, C, TiC, SiC, TiN, and CrN.

All the elements in the above group have a high redox potential, and are less likely to react with surrounding oxides to form fine oxide particles. In addition, since the light absorption ability is high and sufficient light absorption is generated by adding a small amount of fine particles, the fine particles are less likely to adhere to each other to macroscopically develop conductivity. In addition, there is an advantage that they are relatively easily available. Therefore, fine particles of at least one selected from the above group are preferred.

Note that, the fine particles dispersed in the dielectric layer may be of one kind or two or more kinds of the above.

In addition, although the elements exemplified above as options of the fine particles have high conductivity, the fine particles are dispersed in the dielectric layer, so that the absorption type antireflection film has an insulating property.

The fine particles may be dispersed in the high refractive index layer, the low refractive index layer, or both the layers. The number of the dielectric layers in which the fine particles are dispersed is not particularly limited, and may be one or two or more.

It is preferable that the fine particles are dispersed in the dielectric layers other than the outermost layer among the dielectric layers constituting the absorption type antireflection film. Note that, the dielectric layer in which the fine particles are dispersed influences the luminous transmittance and the luminous reflectance measured on the outermost surface of the glass plate according to the present embodiment and on the sheet resistance of the absorption type antireflection film.

It is preferable that the dielectric layer is mainly composed of an oxide of at least one selected from the group consisting of Si, Nb, Ti, Zr, Ta, Al, Sn, and In, or a nitride of at least one selected from the group consisting of Si and Al. From the viewpoint of productivity and the refractive index, it is more preferable that the high refractive index layer is composed of one selected from niobium oxide, tantalum oxide, and silicon nitride, and the low refractive index layer is composed of a layer composed of a silicon oxide.

The reasons are described as follows.

It is preferable that the dielectric layer itself does not have a light absorption ability, and therefore, it is preferable that the dielectric layer has a low absorption ability in the entire visible wavelength region. In order to form a film having antireflection performance, a film having a refractive index of 1.5 or less at a wavelength of 550 nm is preferred for the low refractive index layer, and a film having a refractive index of 1.8 or more is preferred for the high refractive index layer. When making selection from the above groups, such conditions are satisfied.

Note that, in the present description, "mainly" means that the ratio of the above oxides or nitrides in the constituent material of the dielectric layer is 70 mass% or more.

The constituent material of the dielectric layer is appropriately selected from the above oxides or nitrides so as to form desired refractive index layers (a high refractive index layer or a low refractive index layer). Note that, the constituent material of the dielectric layer is appropriately selected so as to form a desired refractive index layer (a high refractive index layer or a low refractive index layer) including the refractive index of the fine particles.

Note that, the dielectric layer may be composed of only one kind of the above oxides or nitrides, or may be composed of two or more kinds thereof.

Based on the above, as a suitable specific example of the absorption type antireflection film, the main component of each of the dielectric layers in the laminated structure is an oxide of at least one selected from the group consisting of Si, Nb, Ti, Zr, Ta, Al, Sn, and In, or a nitride of at least one of Si and Al. Fine particles of at least one selected from the group consisting of Ag, Mo, W, Cu, Au, Pd, Pt, Ir, Ni, Co, Fe, Cr, C, TiC, SiC, TiN, and CrN are dispersed in at least one of the dielectric layers.

As another suitable aspect of the absorption type antireflection film, one of the layers constituting the laminated structure is composed of a mixed oxide containing at least one selected from the group A consisting of Mo and W and at least one selected from the group B consisting of Si, Nb, Ti, Zr, Ta, Al, Sn, and In. In the mixed oxide, the content of the element in the group B contained in the mixed oxide (hereinafter, referred to as a group B content) is preferably less than 50 mass% with respect to the total of the elements in the group A contained in the mixed oxide and the elements in the group B contained in the mixed oxide.

Another layer constituting the laminated structure is composed of an oxide of Si, that is, $SiO_2$, as a main component.

As a light transmitting film having a light absorption ability and an insulating property, a halftone mask for use in the semiconductor production field is known. As the halftone mask, an oxygen-deficient film such as a $Mo\text{-}SiO_x$ film containing a small amount of Mo is used. In addition, as the light transmitting film having a light absorption ability and an insulating property, a narrow bandgap film for use in the semiconductor production field is known.

However, these films have a high light absorption ability of visible light on a short wavelength side, so that the transmitted light is yellowish. Therefore, these films are not suitable for a cover glass in an image display device.

In the present aspect, by using a laminated structure including a layer having an increased content of Mo and a layer composed of $SiO_2$, it is possible to obtain a glass plate that has a light absorption ability and an insulating property and that does not cause the transmitted light to be yellowish.

Note that, the main component in the present description means that the ratio of the mixed oxide containing at least one selected from the group A consisting of Mo and W and at least one selected from the group B consisting of Si, Nb, Ti, Zr, Ta, Al, Sn, and In in the constituent material of the layer is 70 mass% or more, and the ratio of the oxide of Si in the constituent material of the layer is 70 mass% or more.

When the layer in which the main component is a mixed oxide of the group A and the group B is referred to as a layer (A-B-O) and the layer in which the main component is an oxide of Si is referred to as a layer ($SiO_2$), the content of the group B in the layer (A-B-O) is preferably less than 50 mass%, more preferably 45 mass% or less, still more preferably 40 mass% or less, and particularly preferably 35 mass% or less, from the viewpoint of reducing the b* value of the glass plate in the transmitted color under the D65 light source.

In the absorption type antireflection film, the layer ($SiO_2$) and the layer (A-B-O) may be laminated in this order, or the layer (A-B-O) and the layer ($SiO_2$) may be laminated in this order from the first main surface side of the glass plate. In addition, the absorption type antireflection film may have a laminated structure in which three or more layers having different refractive indices each other are laminated. In this case, it is sufficient that at least one layer is the layer ($SiO_2$) and at least another layer is the layer (A-B-O), and other layers may or may not be included. In addition, in the case where there are a plurality of layers ($SiO_2$) and a plurality of layers (A-B-O), the layers ($SiO_2$) and the layers (A-B-O) may respectively be the same as or different from each other. The same applies to the case where the number of layers is four or more.

The outermost layer of the absorption type antireflection film is preferably the layer ($SiO_2$). This is because in the case where the outermost layer is the layer ($SiO_2$), preparation is relatively easy in order to obtain low reflectivity. In addition, in the case of further forming an anti finger print film, it is preferable to form the anti finger print film on the layer ($SiO_2$) from the viewpoint of bonding properties related to durability of the anti finger print film. For such a reason, the outermost layer of the absorption type antireflection film is preferably the layer ($SiO_2$).

In any aspect of the absorption type antireflection films, from the viewpoint of preventing reflected glare of external light on the glass plate, the luminous reflectance measured on the outermost surface of the region having the absorption type antireflection film covering the uneven structure on the first main surface side is preferably 1% or less, more preferably 0.8% or less, and still more preferably 0.6% or less. The luminous reflectance is not particularly limited in lower limit, and is generally 0.1% or more.

Note that, the luminous reflectance in the present description is a value measured in accordance with JIS Z 8701 (1999). Note that, as the luminous reflectance, an average value obtained by measurement at arbitrary three points on a diagonal line is preferably used. However, as the arbitrary measurement point, a point having an extreme outlier is excluded.

In any aspect of the absorption type antireflection films, the sheet resistance of the absorption type antireflection film is preferably $10^6$ $\Omega/\square$ or more, more preferably $10^7$ $\Omega/\square$ or more, and still more preferably $10^8$ $\Omega/\square$ or more, from the viewpoint of maintaining a change in capacitance due to the contact of a finger necessary for a capacitance-type touch sensor when a touch panel is applied to the glass plate, and suitably functioning the touch panel. The sheet resistance of the absorption type antireflection film is not particularly limited in upper limit, and is generally $10^{10}$ $\Omega/\square$ or less.

Note that, the sheet resistance of the absorption type antireflection film in the present description is a value measured in accordance with ASTM D257 or JIS K 6271-6 (2008). Note that, as the sheet resistance of the antireflection film in the present description, an average value obtained by measurement at arbitrary three points on a diagonal line is preferably used. However, as the arbitrary measurement point, a point having an extreme outlier is excluded.

In order to set the sheet resistance of the absorption type antireflection film, the luminous reflectance and the luminous transmittance measured on the outermost surface of the region having the absorption type antireflection film on the first main surface side, and the b* value of the glass plate to desired ranges, it is preferable to select an appropriate combination of the dielectric layer in the absorption type antireflection film and the fine particles dispersed in the dielectric layer.

The dielectric layer in which the fine particles are dispersed has a sheet resistance of preferably $10^8 \, \Omega/\square$ or more, and more preferably $10^9 \, \Omega/\square$ or more when measured in a dielectric layer in which no fine particles are dispersed.

On the other hand, the fine particles as a simple substance preferably has a volume resistivity of $10^{-5} \, \Omega m$ or less.

The dielectric layer in which the fine particles are dispersed has an extinction coefficient of preferably in a range of 0.005 to 3, and more preferably in a range of 0.01 to 1 at a wavelength of 550 nm.

The extinction coefficient is preferably 0.005 or more, and more preferably 0.01 or more, from the viewpoint of obtaining good absorption properties at a reasonable film thickness and realizing a suitable luminous transmittance. On the other hand, the extinction coefficient is preferably 3 or less, and more preferably 1 or less, from the viewpoint of preventing the luminous transmittance from being too low due to too strong absorption. Accordingly, the transmitted light does not be yellowish, and the b* value of the glass plate can also be in a suitable range.

In addition, a dielectric layer formed on the dielectric layer in which the fine particles are dispersed preferably has a dielectric constant of 1.3 to 1.5 and a thickness of 30 nm to 150 nm.

Examples of the glass plate in which the luminous transmittance, the b* value, the luminous reflectance, and the sheet resistance satisfy the suitable ranges include the following configurations.

An absorption type antireflection film is formed on one main surface of a glass plate, and a dielectric layer in which fine particles having a light absorption ability are dispersed is formed on the other main surface.

Examples of the fine particles having a light absorption ability include oxides such as chromium oxide and iron oxide, carbides such as chromium carbide and tungsten carbide, carbon black, and mica.

Examples of the dielectric layer in which the fine particles having a light absorption ability are dispersed include resin layers composed of a homopolymer of an epoxy-based resin, an acrylic resin, a polyethylene terephthalate, a polyethersulfone, a polyarylate, a polycarbonate, a transparent ABS resin, a phenolic resin, an acrylonitrile-butadiene-styrene resin, a polyurethane, a polymethyl methacrylate, a polyvinyl, a polyvinyl butyral, a polyether ether ketone, a polyethylene, a polyester, a polypropylene, a polyamide, and a polyimide, and a copolymer of monomers of these resins with a monomer copolymerizable therewith.

·· Luminous Transmittance of Glass Plate

The glass plate in the first embodiment preferably has a luminous transmittance of 20% to 85% measured on the outermost surface of the region having the antireflection film on the first main surface side. Here, the luminous transmittance is preferably 20% or more, more preferably 30% or more, and still more preferably 40% or more, and is preferably 85% or less, more preferably 80% or less, and still more preferably 75% or less, from the viewpoint of exhibiting an appropriate light absorption ability and improving a bright contrast of the display device by preventing reflection from an interface between the display device and an adhesive layer in the case where the glass plate is used as a cover glass of the display device.

Note that, the luminous transmittance in the present description is a value measured in accordance with JIS Z 8701 (1999). In addition, as the luminous transmittance in the present description, an average value obtained by measurement at arbitrary three points on a diagonal line is preferably used. However, as the arbitrary measurement point, a point having an extreme outlier is excluded.

·· b* Value of Glass Plate

The glass plate in the first embodiment has a b* value of preferably 5 or less, more preferably 3 or less, and still more preferably 2 or less measured for the region having the antireflection film, from the viewpoint that the glass plate can be suitably used as a cover glass of the display device without the transmitted light being yellowish. The lower limit of the b* value is not particularly limited, and may be 0.

Note that, the b* value of the glass plate in the present description is a value in a transmitted color under a D65 light source measured in accordance with JIS Z 8729 (2004). In addition, as the b* value in the present description, an average value obtained by measurement at arbitrary three points on a diagonal line is preferably used. However, as the arbitrary measurement point, a point having an extreme outlier is excluded.

·· Transmission Haze

In general, as the value of the transmission haze measured on the outermost surface of a region having the uneven structure and a non-absorption type antireflection film on the first main surface side of the glass plate increases, light is scattered, and the appearance of the glass plate is more whitish. Therefore, regarding a whitish appearance of the glass plate, in order to set the brightness L* value of the glass plate in the SCE method to 4.7 or less, the transmission haze needs to be less than 15%.

However, as a result of studies by the present inventors, it has been found that, in the case where the absorption type antireflection film is formed to cover the uneven structure, even when the transmission haze is 15% or more, the brightness L* value of the glass plate in the SCE method can be 4.7 or less, and the glass plate can be prevented from being whitish.

Therefore, the transmission haze in the first embodiment may be 15% or more, 17% or more, or 20% or more. In addition, the transmission haze is preferably 35% or less, more preferably 32% or less, and still more preferably 30% or less, from the viewpoint of reducing the brightness L* value of the glass plate.

Note that, the transmission haze in the present description represents a transmittance loss caused by surface reflection (Fresnel reflection) according to a refractive index difference from air when light is incident on the glass plate, and is measured by using a method in accordance with JIS K 7136 (2000). Note that, as the transmission haze in the present description, an average value obtained by measurement at arbitrary three points on a diagonal line is preferably used. However, as the arbitrary measurement point, a point having an extreme outlier is excluded.

Specifically, the transmission haze is quantified by the following method.

The glass plate is provided on a light source such that the first main surface side of the glass plate is the light source side, and the transmitted light is subjected to measurement from above the glass plate by using a haze meter HZ-1 manufactured by Suga Test Instruments Co., Ltd.

When a direction parallel to the thickness direction of the glass plate is defined as an angle of 0°, light detected within ±2.5° is defined as transmitted light, and light detected less than -2.5° or more than +2.5° is defined as scattered light (transmitted light loss). Then, a ratio of the scattered light to a sum of the transmitted light and the scattered light, that is, a total light transmission amount, is defined as the transmission haze (%).

·· Uneven Structure-1

In the first embodiment, as one aspect of the uneven structure on the first main surface side of the glass plate, at least a part thereof is covered with the absorption type antireflection film. Regarding a surface roughness, a surface of the uneven structure preferably satisfies one or more of the following (1) to (4), more preferably satisfies two or more thereof, still more preferably satisfies three or more thereof, and particularly preferably satisfies all of the four. In addition, in the case where the absorption type antireflection film, the anti finger print film, or the like is formed to cover the uneven structure, the outermost surface after formation of these films preferably satisfies one or more of the following (1) to (4), more preferably satisfies two or more thereof, still more preferably satisfies three or more thereof, and particularly preferably satisfies all of the four. Note that, since the absorption type antireflection film or the like is formed in accordance with the formed uneven structure, the formed uneven structure and an uneven shape of the outermost surface on which the absorption type antireflection film or the like is formed are substantially the same.

(1) Roughness curve element average length Rsm is less than 26 $\mu$m.
(2) Arithmetic average roughness Ra is 0.12 $\mu$m or more.
(3) Skewness Rsk is -1 to 1.
(4) Kurtosis Rku is 2 to 4.

The roughness curve element average length Rsm means an average of lengths of contour curve elements at a reference length, and is a value measured in accordance with JIS B 0601 (2013) (ISO4287:1997). The roughness curve element average length Rsm is preferably less than 26 $\mu$m, and is more preferably 24 $\mu$m or less, and still more preferably 22 $\mu$m or less from the viewpoint of reducing interference of light caused by the uneven structure and increasing the anti-sparkle index value S. On the other hand, the roughness curve element average length Rsm is preferably 5 $\mu$m or more, more preferably 7 $\mu$m or more, and still more preferably 9 $\mu$m or more, from the viewpoint of increasing the reflection image diffusiveness index value R.

The arithmetic average roughness Ra means an average of absolute values of Z(x) at a reference length, and is a value measured in accordance with JIS B 0601 (2013) (ISO4287:1997). The arithmetic average roughness Ra is preferably 0.12 $\mu$m or more, more preferably 0.13 $\mu$m or more, and still more preferably 0.14 $\mu$m or more, from the viewpoint of increasing the reflection image diffusiveness index value R. On the other hand, the arithmetic average roughness Ra is preferably 0.3 $\mu$m or less, more preferably 0.28 $\mu$m or less, and still more preferably 0.26 $\mu$m or less, from

the viewpoint of ensuring stability of the uneven structure.

The skewness Rsk is a mean cube value of Z(x) at a reference length, made dimensionless by the cube of a root mean square height (Zq), and it is a value measured in accordance with JIS B 0601 (2013). The skewness Rsk is preferably -1 to 1. Here, the skewness Rsk is preferably -1 or more, more preferably -0.9 or more, and still more preferably -0.8 or more, and is preferably 1 or less, more preferably 0.9 or less, and still more preferably 0.8 or less, from the viewpoint of defining the structure of a tip portion of the uneven structure and reducing a dynamic friction resistance.

The kurtosis Rku is a mean biquadratic value of Z(x) at a reference length, made dimensionless by the fourth power of the root mean square height (Zq), and it is a value measured in accordance with JIS B 0601 (2013). The kurtosis Rku is preferably 2 to 4. Here, the kurtosis Rku is preferably 2 or more, more preferably 2.2 or more, and still more preferably 2.4 or more, and is preferably 4 or less, more preferably 3.8 or less, and still more preferably 3.6 or less, from the viewpoint of defining a degree of sharpness of the tip portion of the uneven structure and reducing the dynamic friction resistance.

Note that, as the roughness curve element average length Rsm, the arithmetic average roughness Ra, the skewness Rsk, and the kurtosis Rku in the present description, an average value obtained by measurement at arbitrary three points on a diagonal line is preferably used. However, as the arbitrary measurement point, a point having an extreme outlier is excluded.

The glass plate satisfying the uneven structure in the present embodiment can be obtained by using, for example, a frost method, and details thereof will be described later.

In addition, in the aspect of the first embodiment in which the uneven structure-1 is adopted, the arithmetic average roughness Ra is relatively large, and the roughness curve element average length Rsm, that is, the width of the unevenness is relatively small. In addition, the skewness Rsk and the kurtosis Rku are close to a normal distribution. That is, a crack in the first embodiment is not deep, and therefore, in order to realize the desired average dynamic friction coefficient COF and friction change amount delta while maintaining the clarity index value T and the anti-sparkle index value S at a certain value or more, and to improve a sense of touch during the swipe, a tip of the unevenness has to be pointed. Therefore, the transmission haze tends to increase.

However, as a result of studies by the present inventors, it has been found that, in the case where at least a part of the uneven structure is covered with the absorption type antireflection film, even when the transmission haze is high, a substrate can be prevented from being whitish, and the brightness L* value in the SCE method can be 4.7 or less.

·· Uneven Structure-2

In the first embodiment, as one aspect of the uneven structure on the first main surface side of the glass plate, at least a part thereof is covered with the absorption type antireflection film. Regarding the surface roughness, the surface of the uneven structure preferably satisfies one or more of the following (1) to (3), more preferably satisfies two or more thereof, and particularly preferably satisfies all of the three. In addition, in the case where the absorption type antireflection film, the anti finger print film, or the like is formed to cover the uneven structure, the outermost surface after formation of these films preferably satisfies one or more of the following (1) to (3), more preferably satisfies two or more thereof, and still more preferably satisfies all of the three. Note that, since the absorption type antireflection film or the like is formed in accordance with the formed uneven structure, the formed uneven structure and an uneven shape of the outermost surface on which the absorption type antireflection film or the like is formed are substantially the same.

(1) Roughness curve element average length Rsm is 26 $\mu$m or more.
(2) Skewness Rsk is -4 to -1.5.
(3) Kurtosis Rku is 5 to 20.

The roughness curve element average length Rsm is preferably 26 $\mu$m or more, more preferably 27 $\mu$m or more, still more preferably 28 $\mu$m or more, even more preferably 30 $\mu$m or more, and most preferably 32 $\mu$m or more. On the other hand, the roughness curve element average length Rsm is preferably 50 $\mu$m or less, more preferably 48 $\mu$m or less, and still more preferably 46 $\mu$m or less, from the viewpoint of avoiding the contact of the finger with a concave portion.

The skewness Rsk is preferably -4 to -1.5. Here, the skewness Rsk is preferably -4 or more, more preferably -3.8 or more, and still more preferably -3.6 or more, and is preferably -1.5 or less, more preferably -1.7 or less, still more preferably -1.9 or less, and even more preferably -2.5 or less, from the viewpoint of defining the structure of the tip portion of the uneven structure and reducing the dynamic friction resistance.

The kurtosis Rku is preferably 5 to 20. Here, the kurtosis Rku is preferably 5 or more, more preferably 6 or more, still more preferably 7 or more, and even more preferably 11 or more, and is preferably 20 or less, more preferably 18 or less, and still more preferably 16 or less, from the viewpoint of defining the degree of sharpness of the tip portion of the uneven structure and reducing the dynamic friction resistance.

As the shape of the uneven structure, the arithmetic average roughness Ra may be further considered. The arithmetic average roughness Ra is preferably 0.01 $\mu$m or more, more preferably 0.02 $\mu$m or more, and still more preferably 0.03 $\mu$m or more. On the other hand, the arithmetic average roughness Ra is preferably 0.30 $\mu$m or less, more preferably 0.28 $\mu$m or less, and still more preferably 0.26 $\mu$m or less, from the viewpoint of ensuring the stability of the uneven structure.

The glass plate satisfying the uneven structure-2 in the present embodiment can be obtained by adopting, for example, a wet blasting method, and details thereof will be described later.

In the aspect of the first embodiment in which the uneven structure-2 is adopted, the roughness curve element average length Rsm, that is, the width of the unevenness is relatively large. In addition, the skewness Rsk is large in a negative direction, that is, a tip of the concave portion serving as a valley is pointed, and a tip of the convex portion serving as a mountain is rounded. Further, the kurtosis Rku is relatively large, symmetry of shapes of the concave portion and the convex portion deviates from the normal distribution, and the tip of the convex portion is rounded.

With such an aspect, it is easy to maintain a low transmission haze while maintaining the clarity index value T and the anti-sparkle index value S at a certain value or more, realizing the desired average dynamic friction coefficient COF and friction change amount delta, and improving the sense of touch during the swipe. However, the transmission haze may be 15% or more depending on the intended optical properties and sense of touch. Even in this case, when at least a part of the uneven structure is covered with the absorption type antireflection film, the substrate can be prevented from being whitish, and the brightness L* value in the SCE method can be 4.7 or less.

· Second Embodiment

In the second embodiment, the glass plate has a transmission haze of less than 15% on the outermost surface of the region having the uneven structure on the first main surface side, as measured by a method in accordance with JIS K 7136 (2000).

· · Transmission Haze

As the value of the transmission haze measured on the outermost surface of a region having the uneven structure and arbitrary antireflection film on the first main surface side of the glass plate increases, light is scattered, and the appearance of the glass plate is more whitish. Therefore, regarding a whitish appearance of the glass plate, the transmission haze is preferably less than 15%, more preferably 14% or less, and still more preferably 13% or less, from the viewpoint of reducing the brightness L* value of the glass plate in the SCE method. The transmission haze is not particularly limited in upper limit, and is generally 0.1% or more.

· · Uneven Structure

In the second embodiment, regarding the surface roughness, the surface of the uneven structure on the first main surface side of the glass plate preferably satisfies one or more of the following (1) to (3), more preferably satisfies two or more thereof, and still more preferably satisfies all of the three. Whether the uneven structure further includes an antireflection film, an anti finger print film, or the like in at least a part thereof is arbitrary as described above, and in the case where these films are formed, the outermost surface after the film formation preferably satisfies one or more of the following (1) to (3), more preferably satisfies two or more thereof, and still more preferably satisfies all of the three. Note that, since the antireflection film or the like is formed in accordance with the formed uneven structure, the formed uneven structure and an uneven shape of the outermost surface on which the antireflection film or the like is formed are substantially the same.

(1) Roughness curve element average length Rsm is 26 $\mu$m or more.
(2) Skewness Rsk is -4 to -1.5.
(3) Kurtosis Rku is 5 to 20.

The roughness curve element average length Rsm means an average of lengths of contour curve elements at a reference length, and is a value measured in accordance with JIS B 0601 (2013). The roughness curve element average length Rsm is preferably 26 $\mu$m or more, more preferably 27 $\mu$m or more, still more preferably 28 $\mu$m or more, even more preferably 30 $\mu$m or more, and most preferably 32 $\mu$m or more. On the other hand, the roughness curve element average length Rsm is preferably 50 $\mu$m or less, more preferably 48 $\mu$m or less, and still more preferably 46 $\mu$m or less, from the viewpoint of avoiding the contact of the finger with a concave portion.

The skewness Rsk is a mean cube value of $Z(x)$ at a reference length, made dimensionless by the cube of a root mean square height (Zq), and it is a value measured in accordance with JIS B 0601 (2013). The skewness Rsk is preferably -4 to -1.5. Here, the skewness Rsk is preferably -4 or more, more preferably -3.8 or more, and still more preferably -3.6 or more, and is preferably -1.5 or less, more preferably -1.7 or less, still more preferably -1.9 or less, and even more preferably -2.5 or less, from the viewpoint of defining the structure of the tip portion of the uneven structure and reducing the dynamic friction resistance.

The kurtosis Rku is a mean biquadratic value of Z(x) at a reference length, made dimensionless by the fourth power of the root mean square height (Zq), and it is a value measured in accordance with JIS B 0601 (2013). The kurtosis Rku is preferably 5 to 20. Here, the kurtosis Rku is preferably 5 or more, more preferably 6 or more, still more preferably 7 or more, and even more preferably 11 or more, and is preferably 20 or less, more preferably 18 or less, and still more preferably 16 or less, from the viewpoint of defining the degree of sharpness of the tip portion of the uneven structure and reducing the dynamic friction resistance.

As the shape of the uneven structure, the arithmetic average roughness Ra may be further considered. It means an average of absolute values of Z(x) at a reference length, and is a value measured in accordance with JIS B 0601 (2013). The arithmetic average roughness Ra is preferably 0.01 $\mu$m or more, more preferably 0.02 $\mu$m or more, and still more preferably 0.03 $\mu$m or more. On the other hand, the arithmetic average roughness Ra is preferably 0.30 $\mu$m or less, more preferably 0.28 $\mu$m or less, and still more preferably 0.26 $\mu$m or less, from the viewpoint of ensuring the stability of the uneven structure.

The glass plate according to the second embodiment can be obtained by adopting, for example, a wet blasting method and setting the spray angle of the slurry within an appropriate range, and details thereof will be described later.

In the second embodiment, the roughness curve element average length Rsm, that is, the width of the unevenness is relatively large. In addition, the skewness Rsk is large in a negative direction, that is, a tip of the concave portion serving as a valley is pointed, and a tip of the convex portion serving as a mountain is rounded. Further, the kurtosis Rku is relatively large, symmetry of shapes of the concave portion and the convex portion deviates from the normal distribution, and the tip of the convex portion is rounded. In this manner, in the second embodiment, by deepening a crack, that is, deepening the concave portion and the convex portion, it is possible to realize the desired average dynamic friction coefficient COF and friction change amount delta while maintaining a low transmission haze. As a result, it is found that a substrate can also be prevented from being whitish and the brightness L* value in the SCE method can be maintained low.

·· Antireflection Film

In the second embodiment, the antireflection film is arbitrary.

For example, in the case where a film similar to the absorption type antireflection film in the first embodiment is formed to cover at least a part of the uneven structure, the substrate can be prevented from being whitish and the brightness L* value can be further reduced as in the first embodiment. A preferred aspect of the antireflection film in this case is the same as the preferred aspect of the absorption type antireflection film in the first embodiment.

In addition to the above, in the second embodiment, since the transmission haze is less than 15%, the antireflection film in the first embodiment can be adopted, and other antireflection films widely used in the related art may be adopted.

For example, in an antireflection film having a laminated structure in which two or more layers of a low refractive index layer and a high refractive index layer are alternately laminated, the main component of the high refractive index layer is preferably at least one selected from the group consisting of silicon nitride, titanium oxide, niobium oxide, tantalum oxide, and zirconium oxide.

As the number of laminated layers increases, the laminated structure can be optically designed to have a layer configuration exhibiting lower reflectivity in a wider wavelength range. For example, the number of laminated layers in the laminated structure of the antireflection film is preferably 2 to 8, and more preferably 2 to 6 in total, from the viewpoint of a reflectance reduction effect and mass productivity.

The materials of the high refractive index layer and the low refractive index layer are not particularly limited, and can be appropriately selected in consideration of the degree of required antireflection properties, productivity, and the like. The main component of the high refractive index layer is, for example, preferably at least one selected from the group consisting of silicon nitride, titanium oxide, niobium oxide, tantalum oxide, and zirconium oxide as described above, and more preferably at least one selected from the group consisting of silicon nitride, niobium oxide, and tantalum oxide from the viewpoint of the productivity and the refractive index.

The material constituting the low refractive index layer is preferably at least one selected from the group consisting of silicon oxide, a material containing a mixed oxide of Si and Sn, a material containing a mixed oxide of Si and Zr, and a material containing a mixed oxide of Si and Al, and more preferably a layer composed of silicon oxide from the viewpoint of the productivity and the refractive index.

The suitable ranges of the luminous reflectance and the sheet resistance of the antireflection film measured on the outermost surface of the region having the antireflection film on the first main surface side are also the same as the suitable ranges of the luminous reflectance and the sheet resistance in the first embodiment.

·· Luminous Transmittance and b* Value of Glass Plate

The suitable ranges of the luminous transmittance and the b* value measured on the outermost surface of the glass plate according to the second embodiment on the first main surface side are the same as the suitable ranges of the luminous transmittance and the b* value measured on the outermost surface of the glass plate according to the first embodiment on the first main surface side, respectively.

<Composition of Glass Plate>

In the glass plate according to the present embodiment, a base glass preferably has a refractive index of 1.4 to 1.7 from the viewpoint of sufficiently preventing reflection on a bonding surface in the case where a display, a touch panel, or the like is optically bonded thereto.

Specifically, glasses having various compositions can be adopted, and for example, an alkali-free glass, a soda lime glass, a soda lime silicate glass, an aluminosilicate glass, a borate glass, a lithium aluminosilicate glass, a lead glass, an alkali barium glass, an aluminoborosilicate glass, or a borosilicate glass can be used. Among them, a soda lime glass and an aluminosilicate glass are more preferred from the viewpoint of facilitating ion exchange in a chemical strengthening treatment to be described later.

In addition, the glass composition preferably contains sodium, and is preferably a composition that can be strengthened by molding and a chemical strengthening treatment.

More specific examples of the glass composition include, but are not particularly limited to, a glass having a composition containing, in mol% in terms of oxides, 50% to 80% of $SiO_2$, 0.1% to 25% of $Al_2O_3$, 3% to 30% of $Li_2O+Na_2O+K_2O$, 0% to 25% of MgO, 0% to 25% of CaO, and 0% to 5% of $ZrO_2$.

More specific examples include the following glass compositions (i) to (v). Note that, for example, "containing 0% to 25% of MgO" means that MgO is not essential but may be contained up to 25%.

(i) A glass having a composition containing, in mol%, 63% to 73% of $SiO_2$, 0.1% to 5.2% of $Al_2O_3$, 10% to 16% of $Na_2O$, 0% to 1.5% of $K_2O$, 0% to 5.0% of $Li_2O$, 5% to 13% of MgO, and 4% to 10% of CaO in a composition represented by mol% in terms of oxides;

(ii) a glass having a composition containing, in mol% in terms of oxides, 50% to 74% of $SiO_2$, 1% to 10% of $Al_2O_3$, 6% to 14% of $Na_2O$, 3% to 11% of $K_2O$, 0% to 5.0% of $Li_2O$, 2% to 15% of MgO, 0% to 6% of CaO, and 0% to 5% of $ZrO_2$, in which the total content of $SiO_2$ and $Al_2O_3$ is 75% or less, the total content of $Na_2O$ and $K_2O$ is 12% to 25%, and the total content of MgO and CaO is 7% to 15%;

(iii) a glass having a composition containing, in mol% in terms of oxides, 68% to 80% of $SiO_2$, 4% to 10% of $Al_2O_3$, 5% to 15% of $Na_2$, 0% to 1% of $K_2O$, 0% to 5.0% of $Li_2O$, 4% to 15% of MgO, and 0% to 1% of $ZrO_2$;

(iv) a glass having a composition containing, in mol% in terms of oxides, 67% to 75% of $SiO_2$, 0% to 4% of $Al_2O_3$, 7% to 15% of $Na_2O$, 1% to 9% of $K_2O$, 0% to 5.0% of $Li_2O$, 6% to 14% of MgO, and 0% to 1.5% of $ZrO_2$, in which the total content of $SiO_2$ and $Al_2O_3$ is 71% to 75%, the total content of $Na_2O$ and $K_2O$ is 12% to 20%, and the content of CaO is less than 1% in the case where CaO is contained;

(v) a glass having a composition containing, in mol% in terms of oxides, 56% to 73% of $SiO_2$, 7% to 24% of $Al_2O_3$, 0% to 6% of $B_2O_3$, 0% to 6% of $P_2O_5$, 2% to 12% of $Li_2O$, 2% to 11% of $Na_2O$, 0% to 5% of $K_2O$, 0% to 8% of MgO, 0% to 2% of CaO, 0% to 5% of SrO, 0% to 5% of BaO, 0% to 5% of ZnO, 0% to 2% of $TiO_2$, and 0% to 4% of $ZrO_2$; and

(vi) a glass having a composition containing, in mol% in terms of oxides, 58% to 80% of $SiO_2$, 13% to 18% of $Al_2O_3$, 0% to 5% of $B_2O_3$, 0.5% to 4% of $P_2O_5$, 3% to 10% of $Li_2O$, 5% to 20% of $Na_2O$, 0% to 2% of $K_2O$, 0% to 11% of MgO, 0% to 20% of CaO, 0% to 20% of SrO, 0% to 15% of BaO, 0% to 10% of ZnO, 0% to 1% of $TiO_2$, and 0% to 2% of $ZrO_2$.

<Chemical Strengthening Treatment>

In the glass plate according to the present embodiment, from the viewpoint of increasing strength and preventing breakage when a stress is applied from the outside, a compressive stress layer is preferably introduced to the outermost surface of the glass plate, and a chemically strengthened glass plate subjected to a chemical strengthening treatment by an ion exchange treatment is more preferred.

In the case of subjecting the glass plate to a chemical strengthening treatment, the total content of $Li_2O$ and $Na_2O$ in the glass composition is preferably 12 mol% or more in order to appropriately perform the chemical strengthening treatment.

Further, in order to increase a surface compressive stress (compressive stress: CS) and a depth of the compressive stress layer (depth of layer: DOL), the glass composition of the glass plate preferably contains 60 mol% or more of $SiO_2$ and 8 mol% or more of $Al_2O_3$.

<Anti Finger Print Film>

The glass plate according to the present embodiment may further have an anti finger print (AFP) film on the antireflection film, or to cover the uneven structure formed on the first main surface.

The anti finger print film is a film that prevents adhesion of organic substances or inorganic substances to the surface, or a film that provides the effect that even when organic substances or inorganic substances adhere to the surface, the adhering substances can be easily removed by cleaning such as wiping.

The anti finger print film is not particularly limited as long as it can impart antifouling properties, and is preferably a fluorine-containing compound, and examples thereof include a fluorine-containing organosilicon compound film obtained by curing a fluorine-containing organosilicon compound by a hydrolysis condensation reaction.

The fluorine-containing organosilicon compound is not particularly limited as long as it can impart antifouling properties, water repellency, and oil repellency. Examples thereof include fluorine-containing organosilicon compounds having one or more groups selected from the group consisting of a polyfluoropolyether group, a polyfluoroalkylene group, and a polyfluoroalkyl group. Note that, the polyfluoropolyether group means a divalent group having a structure in which polyfluoroalkylene groups and etheric oxygen atoms are alternately bonded.

Examples of the commercially available fluorine-containing organosilicon compound include KP-801 (trade name, manufactured by Shin-Etsu Chemical Co., Ltd.), KY178 (trade name, manufactured by Shin-Etsu Chemical Co., Ltd.), KY-130 (trade name, manufactured by Shin-Etsu Chemical Co., Ltd.), KY-185 (trade name, manufactured by Shin-Etsu Chemical Co., Ltd.), and Optool (registered trademark) DSX and Optool AES (trade name, both manufactured by Daikin Industries, Ltd.).

The thickness of the anti finger print film is not particularly limited, and in the case where the anti finger print film is formed of a fluorine-containing organosilicon compound film, the thickness is preferably 2 nm to 20 nm. From the viewpoint of obtaining a state of being uniformly covered with the anti finger print film and obtaining good rubbing resistance, the thickness is preferably 2 nm or more. In addition, from the viewpoint of maintaining good optical properties, the thickness is preferably 20 nm or less, more preferably 15 nm or less, and still more preferably 10 nm or less.

<Size and Shape>

The thickness of the glass plate according to the present embodiment is not particularly limited, and is generally preferably 5 mm or less from the viewpoint of effectively performing a chemical strengthening treatment in the case of performing the treatment. In addition to the above viewpoint, in the case where the glass plate is used as a cover glass of an in-vehicle display device, the thickness of the glass plate is more preferably 3 mm or less from the viewpoint of reducing the weight of a vehicle body, and the thickness of the glass plate is preferably 0.2 mm or more, more preferably 0.8 mm or more, and still more preferably 1 mm or more from the viewpoint of the strength.

The size of the glass according to the present embodiment is also not particularly limited, and may be appropriately determined according to the application.

The glass plate according to the present embodiment may have a bent portion on at least one of the first main surface and the second main surface. The bent portion means a portion where the average curvature is not zero. In this case, it is preferable to mold a flat glass plate into a predetermined shape.

The bent portion has a dynamic friction coefficient of preferably 0.02 or less, more preferably 0.015 or less, and still more preferably 0.01 or less, from the viewpoint of finger slidability when a human finger touches the bent portion.

Note that, the dynamic friction coefficient of the bent portion in the present description is a value determined by the same method as the average dynamic friction coefficient COF on the outermost surface of the region having the uneven structure in the glass plate.

<Second Main Surface>

The glass plate according to the present embodiment may have a printed layer on at least a part of the second main surface. In the case where the glass plate is used as a cover glass of a display device, by providing a printed layer, it is possible to obtain an effect of clearly indicating a button position to a user and improving operability, and an effect of improving design properties by hiding wiring for a touch panel.

The printed layer is preferably provided on at least a part of the second main surface, and is provided by using a known method under known conditions.

In addition to the above, the glass plate according to the present embodiment may be provided with other functional layers on at least one of the first main surface and the second main surface as long as the effect of the present invention is not impaired. Examples of other functional layers include an infrared cut layer, an ultraviolet cut layer, a water repellent layer, an antistatic layer, an undercoat layer, an adhesion improving layer, and a protective layer. As these other functional layers, known functional layers can be used by using known methods.

<In-vehicle Display Device>

The application of the glass plate according to the present embodiment is not particularly limited, and the glass plate is used for, for example, a cover glass of a display (a notebook computer, a monitor, an LCD, a PDP, an ELD, a CRT, a PDA, or the like).

Among them, the glass plate is preferably used as a cover glass of an in-vehicle display device since the glass plate can be suitably used for applications in which a distance between a person who visually recognizes the glass plate and the glass plate is fixed, and since a sense of touch in a touch panel operation is required.

Examples of the in-vehicle display device include instrument panels called clusters such as a speedometer, center information displays (CID) such as a car navigation system and a display audio system, and rear seat entertainments (RSE).

That is, the present invention also relates to an in-vehicle display device including a cover glass made of the above glass plate and a display panel. The display panel includes a light emitter, and examples of the light emitter include an organic EL, an organic light emitting diode (OLED), a light source for a liquid crystal display (LCD), a micro LED, and a phosphor. That is, examples of the display device include an organic EL display, an OLED display, an LCD, a micro LED display, and a plasma display.

The glass plate in the in-vehicle display device is disposed such that the first main surface side of the glass plate is a visual recognitions side. The in-vehicle display device according to the present embodiment is has an excellent sense of touch during a swipe operation in addition to good clarity.

<Selection Method>

The present invention also relates to a method for selecting the glass plate according to the present embodiment described above in order to obtain a glass plate having an excellent sense of touch during a swipe operation while maintaining suitable clarity.

The glass plate according to the present embodiment described above is a glass plate having a first main surface and a second main surface opposite to the first main surface, and the first main surface has an uneven structure in at least a part thereof. The glass plate has a clarity index value T of 0.85 or more, an anti-sparkle index value S of 0.80 or more, an average dynamic friction coefficient COF of 0.50 or less, and a friction change amount delta of more than -0.210 on the outermost surface of the region having the uneven structure on the first main surface side. In addition, the glass plate has a brightness L* value of 4.7 or less.

A preferred aspect of the glass plate in the selection method according to the present embodiment is the same as the preferred aspect of the glass plate.

<<Method for Producing Glass Plate>>

A method for producing a glass plate according to the present embodiment includes the following steps (i) and (ii).

(i) a step of preparing a glass plate having a first main surface and a second main surface opposite to the first main surface, and
(ii) a step of forming an uneven structure on at least a part of the first main surface.

Between the step (i) and the step (ii) or after the step (ii), a step of subjecting the glass plate to a strengthening treatment may be further included as a step (iii), and the step of subjecting the glass plate to a strengthening treatment is preferably performed after the step (ii).

In addition, the method may further include a step of forming an antireflection film to cover at least a part of the uneven structure as a step (iv). The step (iv) is sufficiently performed after the step (ii), and in the case where the strengthening treatment in the step (iii) is performed, the step (iv) is preferably performed after the step (iii).

<Step (i): Step of Preparing Glass Plate>

As the glass plate in the step (i), a commercially available glass plate may be used or produced.

In the case of producing the glass plate, a known method can be used.

For example, raw materials of respective components are blended to obtain a desired composition, followed by heating and melting in a glass-melting furnace. The glass is homogenized by bubbling, stirring, addition of a refining agent, and the like, and molded into a glass plate having a predetermined thickness by using a known molding method, followed by annealing.

Examples of the glass molding method include a float method, a press method, a fusion method, a down-draw method, and a roll-out method. Among them, a float method is preferred in the case of mass production. As a continuous molding method other than the float method, a fusion method and a down-draw method are also preferred.

A glass member molded into a flat plate shape by using an any molding method is annealed and then cut into a desired size. Note that, in the case where more accurate dimensional accuracy is required, the glass member after cutting may be subjected to polishing or end surface-processing to be described later. Accordingly, cracking and chipping of the glass plate can be reduced in handling in a molding step or the like, and a yield can be improved.

In the case where the glass plate has a bent portion on at least one of the first main surface and the second main surface, the glass plate may be molded into a predetermined shape from a flat glass plate.

The molding may be performed while heating the glass, and examples of the molding method include a self-weight molding method, a vacuum molding method, and a press molding method.

Note that, the glass may be molded before or after the step (ii). In particular, in the case of performing a frost method or a wet blasting method in the step (ii), the glass is preferably molded after the step (ii).

In the case of polishing at least one main surface of the glass plate, for example, the glass plate can be polished by moving a polishing unit of a rotary polishing tool at a constant speed while bringing the polishing unit into contact with the glass plate at a constant pressure. With the polishing under conditions of a constant pressure and a constant speed, the ground surface can be uniformly polished at a constant polishing rate.

An end surface of the glass plate may be subjected to end surface-processing such as chamfering.

The chamfering is preferably processing generally called R chamfering or C chamfering by mechanical grinding, or may be processing by etching or the like, and is not particularly limited.

<Step (ii): Step of Forming Uneven Structure>

In the step (ii), a region having an uneven structure is formed on at least a part of the first main surface, and either a chemical treatment or a physical treatment may be adopted.

Examples of the chemical treatment method include a method of providing unevenness on the first main surface itself by using a frost method.

Examples of the physical treatment method include a method of forming a region having an uneven structure on the first main surface by using a two-fluid spray method or an electrostatic spray method.

Examples of the method using the physical treatment and the chemical treatment in combination include a wet blasting method in which etching is performed after wet blasting.

In the present embodiment, a frost method and a wet blasting method are particularly preferably used.

· Frost Method

In the case where the uneven structure is formed by using a frost method, steps of pre-washing, washing, chemical immersion, and washing are generally performed in this order. Among the above, a known method can be adopted for the pre-washing and the two times of washing.

Among the above, in the chemical immersion, it is preferable to include a step of immersing the glass plate in a solution containing potassium fluoride (KF) and hydrogen fluoride (HF), and then a step of immersing the glass plate in a solution containing hydrogen fluoride. Between the immersions in this two kinds of solutions, washing or drying may be appropriately performed.

Frost processing is performed by the step of immersing the glass plate in the solution containing potassium fluoride and hydrogen fluoride to form an uneven structure on the surface of the glass plate. In addition, etching is performed in the subsequent step of immersing the glass plate in the solution containing hydrogen fluoride to adjust the transmission haze on the surface of the glass plate.

The solution used in the frost processing is a mixed solution containing potassium fluoride and hydrogen fluoride, and the concentration of potassium fluoride in the mixed solution is preferably 0.5 mass% to 5.0 mass%. Here, the concentration is preferably 0.5 mass% or more, more preferably 0.7 mass% or more, and still more preferably 1.0 mass% or more, from the viewpoint of performing the frost processing without shortage. In addition, the concentration is preferably 5.0 mass% or less, more preferably 4.5 mass% or less, and still more preferably 4.0 mass% or less, from the viewpoint of appropriately roughening the surface structure of the glass plate without excessively refining the surface structure, and ensuring an appearance quality.

The concentration of hydrogen fluoride in the mixed solution is preferably 0.5 mass% to 4.0 mass%. Here, the concentration is preferably 0.5 mass% or more, more preferably 0.7 mass% or more, and still more preferably 1.0 mass% or more, from the viewpoint of sufficiently etching the substrate during the frost processing. In addition, the concentration is preferably 4.0 mass% or less, more preferably 3.5 mass% or less, and still more preferably 3.0 mass% or less, from the viewpoint of preventing a masking component generated on the surface of the substrate from being peeled off due to excessive etching.

In the mixed solution, the ratio of the concentration of potassium fluoride to the concentration of hydrogen fluoride (KF/HF) is preferably 0.33 to 3.0. Here, the ratio is preferably 0.33 or more, more preferably 0.5 or more, and still more preferably 0.75 or more, from the viewpoint of precipitating and fixing the mask component on the surface of the substrate. In addition, the ratio is preferably 3.0 or less, more preferably 2.0 or less, and still more preferably 1.33 or less, from the viewpoint of appropriately roughening the surface structure of the glass plate without excessively refining the surface structure, and ensuring the appearance quality.

The above mixed solution may further contain other compounds. In this case, for example, a fluoride is preferred, and examples thereof include ammonium fluoride and potassium phosphate. The concentration of each of the other compounds is preferably 15 mass% or less.

Note that, the above mixed solution is an aqueous solution.

The temperature at which the glass plate is immersed in the solution used in the frost processing is preferably 10°C to 50°C, and more preferably 15°C to 40°C. The immersion time is preferably 60 to 360 seconds, and more preferably 120 to 240 seconds.

The solution used in the etching is a solution containing hydrogen fluoride, and the concentration of hydrogen fluoride in the solution is preferably 0.5 mass% to 20 mass%. Here, the concentration is preferably 0.5 mass% or more, more preferably 1.0 mass% or more, and still more preferably 2.0 mass% or more, from the viewpoint of leveling the tip of the uneven structure formed by the frost processing and efficiently obtaining a suitable shape. In addition, the concentration is preferably 20 mass% or less, more preferably 17 mass% or less, and still more preferably 15 mass% or less in order to prevent fluorine ions from bonding to ions generated when the substrate is dissolved to form a coating on the surface of the substrate.

The above solution may further contain other compounds, and among them, a mixed solution with another acid is preferred from the viewpoint of preventing the substrate from being coated by bonding fluorine ions to ions generated when the substrate is dissolved to dissolve crystals generated on the surface of the substrate. The other acid is preferably hydrochloric acid, nitric acid, sulfuric acid, or the like.

In the case of the mixed solution with another acid, the ratio of the concentration of hydrogen fluoride to the total concentration of other acids is preferably 0.3 to 3.0, more preferably 0.5 or more, and is more preferably 2.0 or less.

Note that, the above solution is an aqueous solution.

The post-etching amount in the etching is not unconditionally determined, and is preferably, for example, $0.5 \mu m$ to $15 \mu m$. Here, the post-etching amount is preferably $0.5 \mu m$ or more, and more preferably $1.0 \mu m$ or more, from the viewpoint of sufficiently removing contamination components adhering to the surface of substrate. In addition the post-etching amount is preferably $15 \mu m$ or less, more preferably $10 \mu m$ or less, and still more preferably $7.0 \mu m$ or less, from the viewpoint of not greatly changing the thickness of the substrate.

By adopting the frost method as described above, it is possible to obtain a glass plate having, on the outermost surface of the region having the uneven structure, a clarity index value T maintained at 0.85 or more and an anti-sparkle index value S maintained at 0.80 or more, and having an average dynamic friction coefficient COF of 0.50 or less and a friction change amount delta of more than -0.210.

In addition, by adopting the frost method as described above, it is possible to obtain a glass plate having a roughness curve element average length Rsm of less than $26 \mu m$, an arithmetic average roughness Ra of $0.12 \mu m$ or more, a skewness Rsk of -1 to 1, and a kurtosis Rku of 2 to 4, regarding the surface roughness on the same outermost surface.

The transmission haze on the outermost surface of the region having the uneven structure in the glass plate obtained above is 15% or more, but by forming an absorption type antireflection film to cover the uneven structure, the substrate can be prevented from being whitish and the brightness L* value can be 4.7 or less.

· Wet Blasting Method

In the case where the uneven structure is formed by using a wet blasting method, generally, a glass plate, preferably a polished glass plate, is subjected to wet blasting, and then subjected to steps such as washing, an etching treatment, and washing.

Among the above, the wet blasting preferably includes a step of spraying a slurry to the first main surface of the glass plate to roughen the first main surface, and a step of immersing the glass plate in a solution containing hydrogen fluoride to etch the glass plate. Washing or drying may be appropriately performed between the roughening step and the etching step.

In the roughening step, a slurry obtained by mixing a liquid such as water and particles (abrasive grains) as an abrasive is fed to a blast gun by a pump, accelerated by compressed air, and then sprayed onto the first main surface of the glass plate to perform surface roughening, processing, washing, peening, and the like.

By appropriately changing the abrasive grain diameter, abrasive grain distribution, abrasive grain kind, abrasive grain concentration, discharge pressure, discharge time, sweep speed, number of sweeps, sweep pitch, spray angle, injection distance, and the like of the particles (abrasive grains) used in the roughening step, optical properties for maintaining suitable clarity and preferred conditions for realizing a good sense of touch are determined.

Among the above conditions, it has been found that generation of lateral cracks can be prevented and median cracks can be mainly formed particularly by making the spray angle of the slurry more gradual than in the related art.

By mainly forming the median cracks, an uneven structure having a large aspect ratio can be formed when the subsequent etching is performed, and a glass plate having a small average dynamic friction coefficient COF and a small brightness L* value can be obtained.

From the above viewpoint, the spray angle of the slurry with respect to the first main surface is preferably less than 90°, more preferably 70° or less, and still more preferably 65° or less. In addition, the spray angle is preferably 45° or more, and more preferably 50° or more, from the viewpoint of sufficiently introducing cracks.

Other than the spray angle, or in addition to the spray angle, conditions such as the abrasive grain diameter and the discharge pressure are found to be very effective in preventing the generation of lateral cracks.

As the abrasive grain kind, known ones can be used, and examples thereof include alumina and silicon carbide.

The abrasive grain diameter varies depending on the abrasive grain kind, and for example, in the case of using alumina, the grain size in accordance with JIS R 6001 (1987) is preferably equal to or less than the average grain diameter of #1500 (larger grain size number), and more preferably equal to or less than the average grain diameter of #2000 (larger grain size number). The lower limit of the grain size is not particularly limited, and the grain size is preferably equal to or larger than the average grain diameter of #6000.

The discharge pressure is preferably 0.1 MP to 0.6 MPa. Here, the discharge pressure is preferably 0.1 MPa or more, more preferably 0.15 MPa or more, and still more preferably 2.0 MPa or more, from the viewpoint of introducing sufficiently deep cracks into the surface of the substrate. In addition, the discharge pressure is preferably 0.6 MPa or less, more preferably 0.5 MPa or less, and still more preferably 0.4 MPa or less, from the viewpoint of preventing chipping and damage to a discharge portion.

The abrasive grain concentration is preferably 5 vol% to 20 vol%. Here, the abrasive grain concentration is preferably 5 vol% or more, more preferably 7 vol% or more, and still more preferably 10 vol% or more, from the viewpoint of introducing a sufficient amount of cracks into the surface of the substrate. In addition, the abrasive grain concentration is preferably 20 vol% or less, more preferably 17 vol% or less, and still more preferably 15 vol% or less, from the viewpoint of sufficiently dispersing the abrasive grains in the liquid.

The number of sweeps is preferably 2 to 64. Here, the number of sweeps is preferably 2 or more, more preferably 4 or more, and still more preferably 8 or more, from the viewpoint of eliminating sweep unevenness in the wet blasting. In addition, the number of sweeps is preferably 64 or less, more preferably 48 or less, and still more preferably 32 or less, from the viewpoint of keeping the processing time within a realistic range.

In the etching step, a solution containing hydrogen fluoride is used, and the concentration of hydrogen fluoride in the solution is preferably 0.5 mass% to 20 mass%. Here, the concentration is preferably 0.5 mass% or more, more preferably 1.0 mass% or more, and still more preferably 1.5 mass% or more, from the viewpoint of enlarging cracks introduced by the wet blasting and obtaining a suitable shape. In addition, the concentration is preferably 20 mass% or less, more preferably 17 mass% or less, and still more preferably 15 mass% or less, from the viewpoint of preventing fluorine ions from bonding to ions generated when the substrate is dissolved at a crack tip portion to generate hardly etchable crystals, inhibiting etching, and changing the crack shape.

The above solution may further contain other compounds, and examples thereof include hydrochloric acid and sulfuric acid. The concentration of each of the other compounds is preferably 15 mass% or less.

Note that, the above solution is an aqueous solution.

The etching amount in the etching step is not unconditionally determined, and is, for example, preferably 1.0 $\mu$m to 30 $\mu$m, and more preferably 2.0 $\mu$m to 20 $\mu$m.

By adopting the wet blasting method as described above, it is possible to obtain a glass plate having, on the outermost surface of the region having the uneven structure, maintained good optical properties such as a clarity index value T of 0.85 or more, an anti-sparkle index value S of 0.80 or more, and a brightness L* value of 4.7 or less, and having a good sense of touch during the swipe such as an average dynamic friction coefficient COF of 0.50 or less and a friction change amount delta of more than -0.210.

In addition, by adopting the wet blasting method as described above, it is possible to obtain a glass plate having a roughness curve element average length Rsm of 26 $\mu$m or more, a skewness Rsk of -4 to -1.5, and a kurtosis Rku of 5 to 20, regarding the surface roughness on the same outermost surface.

Further, in the case of forming the uneven structure by using the wet blasting method, for example, by setting the spray angle of the slurry to 70° or less with respect to the first main surface, the transmission haze can be further set to 15% or less while realizing good optical properties and sense of touch as described above.

On the other hand, even in the case where the wet blasting method is used and the transmission haze on the outermost surface of the region having the uneven structure is more than 15%, similar to the case where the uneven structure is formed by using the frost method, when an absorption type antireflection film is formed to cover the uneven structure, the substrate can be prevented from being whitish and the brightness L* value can be 4.7 or less.

<Step (iii): Step of Performing Strengthening Treatment>

In the case of subjecting the glass plate to the step (iii), which is a strengthening treatment, the step (iii) may be performed between the step (i) and the step (ii), and is preferably performed after the step (ii).

By subjecting at least one of the first main surface and the second main surface of the glass plate to a strengthening treatment, a compressive stress layer is formed on the surface, and the strength and scratch resistance are improved.

As the strengthening treatment, both a physical strengthening treatment and a chemical strengthening treatment can be applied, and a chemical strengthening treatment is preferred since a larger amount of compressive stress can be introduced even in a glass plate having a small thickness.

In the chemical strengthening treatment, the glass plate is immersed in a molten alkali metal salt at a temperature equal to or lower than the glass transition point to exchange alkali metal ions having a small ionic radius present on the surface of the glass plate with alkali metal ions having a larger ionic radius. Specifically, Li ions on the surface of the glass plate are ion-exchanged with Na ions, or Na ions on the surface of the glass plate are ion-exchanged with K ions. Accordingly, a compressive stress layer can be formed on the surface of the glass plate.

The molten salt and treatment conditions used in the chemical strengthening treatment may be known ones.

<Step (iv): Step of Forming Antireflection Film>

In the step (iv), an antireflection film is optionally formed on the glass plate having an uneven structure formed on the surface thereof or the glass plate having an uneven structure formed on the surface thereof and further subjected to a chemical strengthening treatment.

When forming the antireflection film, the antireflection film is sufficiently formed to cover at least a part of the uneven structure, and is preferably formed to cover a region of the glass plate that is to be visually recognized and that is to be touched for a swipe operation or the like.

Even in the case where the transmission haze on the outermost surface of the region having the uneven structure in the glass plate is high, the brightness L* value can be reduced and good clarity can be realized by forming the absorption type antireflection film described in · First Embodiment in the above <First Embodiment and Second Embodiment>.

The antireflection film can be formed by using a known method. For example, the antireflection film is obtained by sequentially forming and laminating a dielectric layer or a layer on the surface of the first main surface of the glass plate by using a known film forming method such as a sputtering method, a vacuum deposition method, a coating method, a chemical vapor deposition method (CVD method), or a physical vapor deposition method (PVD method) such as a PLD method. In addition, the antireflection film may also be formed on the surface of the second main surface of the glass plate.

Examples of the sputtering method include magnetron sputtering, pulse sputtering, AC sputtering, and digital sputtering.

Among the above, for example, the magnetron sputtering method is a method in which a magnet is provided on a back surface of a material serving as a base material of a dielectric layer or a layer to generate a magnetic field, and gas ion atoms collide with the surface of the material and are ejected, to form a sputtering film having a thickness of several nm. A continuous film of a dielectric that is an oxide or a nitride of the above material can be formed.

Among the above, for example, the digital sputtering method is a method of forming a metal oxide thin film by repeating steps of first forming a metal ultra-thin film by sputtering, and then oxidizing the film by irradiation with oxygen plasma, oxygen ions, or oxygen radicals in the same chamber. In this case, since film-forming molecules are metals when deposited on the substrate, it is presumed to be more ductile than the case of depositing a metal oxide. Therefore, it is thought that even when the energy is the same, rearrangement of the film-forming molecules is likely to occur, and as a result, a dense and smooth film can be formed.

In the coating method, for example, a laminated structure can be formed by repeating a method of applying a composition serving as a precursor of a layer constituting an antireflection film by using a spin coating method, a dip coating method, a casting method, a slit coating method, a spray coating method, an electrostatic spray deposition method (ESD method), or the like, and then performing a heat treatment as necessary.

In addition to the above step (i) to step (iv), a known method can also be adopted in the case of further forming an anti finger print film (AFP film). Examples thereof include a method in which a composition of a silane coupling agent having a fluoroalkyl group, such as a perfluoroalkyl group or a fluoroalkyl group containing a perfluoro(polyoxyalkylene) chain, is applied by using a spin coating method, a dip coating method, a casting method, a slit coating method, a spray coating method, or the like, and then performing a heat treatment as necessary, and a vacuum deposition method in which a fluorine-containing organosilicon compound is vapor deposited on the surface of an adhesion layer, and then performing a heat treatment as necessary.

The composition serving as a precursor of the anti finger print film is not particularly limited as long as it is a composition containing a fluorine-containing hydrolyzable silicon compound and can form a film. The composition may contain an optional component other than the fluorine-containing hydrolyzable silicon compound.

The optional component is not particularly limited as long as the effect of the present invention is not impaired, and examples thereof include a hydrolyzable silicon compound having no fluorine atom (hereinafter, referred to as a "fluorine-free water-decomposable silicon compound") and a catalyst.

[Examples]

Hereinafter, the present invention will be described in detail with reference to Examples. However, the present invention is not limited by the following description.

Examples 1 to 6 and 10 are Inventive Examples, and Examples 7 to 9 and 11 to 16 are Comparative Examples.

<<Evaluation Method>>

The following evaluations were measured for each Example. As each physical property value, measurements were performed at arbitrary three positions on a diagonal line of the glass plate, and an average value thereof was used.

<Average Dynamic Friction Coefficient COF and Friction Change Amount Delta>

The dynamic friction coefficient was measured by sliding a pseudo finger at a scanning distance of 50 mm, a load of 100 g, and a scanning speed of 100 mm/sec on the outermost surface of the region having the uneven structure on the first main surface side of the glass plate in an environment of a room temperature of 23°C and a humidity of 21% in a static and dynamic friction measuring machine (multifunctional static and dynamic friction measuring machine TL201, manufactured by Trinity-Lab. Inc.). The data acquisition frequency was set to 1 kHz, and the number of times of sampling was set to five.

The pseudo finger was made of urethane (urethane pseudo finger, manufactured by Trinity-Lab. Inc.), and a contact portion with the outermost surface of the glass plate was formed with linear convex portions in a direction perpendicular to the sliding direction at an interval of 0.5 mm in an area of 10 mm $\times$ 15 mm.

Here, when going back from a time at which the dynamic friction coefficient was at maximum, a time point at which the dynamic friction coefficient was 0 or less for the first time was defined as a movement start time point, and a time point at which the dynamic friction coefficient was 5 or less for the first time after a time point represented by {(movement start time point) + (0.75 $\times$ scanning distance/scanning speed)} was defined as a movement end time point. The value calculated according to the following equation (3) was defined as the average dynamic friction coefficient COF, and the value calculated according to the following equation (4) was defined as the friction change amount delta.

Average dynamic friction coefficient COF = average value of dynamic friction coefficients at (intermediate time point between movement start time point and movement end time point) $\pm$ 0.2 seconds Equation (3)

Equation (3)

Friction change amount delta = (maximum dynamic friction coefficient after movement end time point) - (average dynamic friction coefficient COF) Equation (4)

Equation (4)

<Clarity Index Value T>

A glass plate (100 mm $\times$ 100 mm $\times$ 1.3 mmt) was provided at a position 30 mm away from above a slit-shaped white light source having a length of 40 mm and a width of 0.1 mm such that the first main surface side was a light source side. Then, light transmitted through the glass plate and the angle $\theta$ were detected from the second main surface side of the glass plate by using SMS-1000 (analysis device) manufactured by DM&S (Display-Messtechnik&Systeme), and luminance on the outermost surface of each region having an uneven structure was measured.

The camera lens used was a C1614A lens having a focal distance of 16 mm at a diaphragm of 5.6, and the distance from the outermost surface of the glass plate on the first main surface side to the camera lens was set to 550 mm.

When a direction parallel to the thickness direction of the glass plate was defined as an angle $\theta = 0°$, an average value of luminance in a range of the angle $\theta = 0° \pm 0.1°$ was defined as $T_1$, an average value of luminance in a range of the angle $\theta = 0.7° \pm 0.1°$ was defined as $T_2$, and an average value of luminance in a range of the angle $\theta = -0.7° \pm 0.1°$ was defined as $T_3$, the value calculated according to the following equation (1) was defined as the clarity index value T.

$$\text{Clarity index value } T = 1 - (T_2 + T_3)/(2 \times T_1) \qquad \text{Equation (1)}$$

<Anti-sparkle Index Value S>

The second main surface of a glass plate (100 mm × 100 mm × 1.6 mmt) was provided in contact with a display surface side of a display device (iPad-Air (registered trademark), manufactured by Apple Inc.) having a resolution of 264 ppi. The sparkle value on the outermost surface of the region having the uneven structure, which was determined by image analysis using SMS-1000 manufactured by DM&S provided on the first main surface side of the glass plate in a state where a green monochromatic image composed of RGB (0, 255, 0) was displayed on the display device, was defined as an anti-sparkle $S_a$.

The distance d between SMS-1000 manufactured by DM&S and the outermost surface of the glass plate on the first main surface side was set to 540 mm, and the camera lens used was a 23FM50SP lens having a focal distance of 50 mm at a diaphragm of 5.6.

A glass substrate (100 mm × 100 mm × 1.6 mmt) (VRD140 glass, manufactured by AGC Glass Europe) having the size same, as a reference sample, was also subjected to image analysis under the same conditions, and the determined sparkle value was defined as an anti-sparkle $S_s$.

The value calculated based on the values of $S_a$ and $S_s$ according to the following equation (2) was defined as the anti-sparkle index value S.

$$\text{Anti-sparkle index value } S = 1 - (S_a/S_s) \qquad \text{Equation (2)}$$

<Reflection Image Diffusiveness Index Value R>

A glass plate (100 mm × 100 mm × 1.3 mmt) was provided such that the first main surface side faced upward, and luminance of reflected light obtained by emitting slit-shaped light having a width of 101 mm from above was measured by using SMS-1000 manufactured by DM&S. At this time, in order to eliminate reflected light (back surface reflection) from the second main surface side, a matte black plate was provided on the second main surface side. The camera lens used was a C1614A lens having a focal distance of 16 mm at a diaphragm of 5.6, the distance from the outermost surface of the glass plate on the first main surface to the camera lens was set to 300 mm, and the imaging scale was set to a range of 0.0276 to 0.0278.

When a direction parallel to the thickness direction of the glass plate was defined as an angle $\varphi = 0°$, light was emitted from an angle of angle $\varphi = 5.7° \pm 0.1°$, and an angle $\varphi = -5.7°$ in total reflection was defined as a reference (angle $\alpha = 0°$). When an average value of luminance of the reflected light in a range of the angle $\alpha = 0° \pm 0.1°$ was defined as $R_1$, an average value of luminance of the reflected light in a range of the angle $\alpha = 0.5° \pm 0.1°$ was defined as $R_2$, and an average value of luminance of the reflected light in a range of the angle $\alpha = -0.5° \pm 0.1°$ was defined as $R_3$, The value calculated according to the following equation (5) was defined as the reflection image diffusiveness index value R.

$$\text{Reflection image diffusiveness index value } R = (R_2 + R_3)/(2 \times R_1) \qquad \text{Equation (5)}$$

<Brightness L* Value>

In order to evaluate the whiteness of the glass plate, the brightness L* value in a specular component exclude (SCE) method measured by a method in accordance with ASTM E313-73 standard was measured by using CM-26d manufactured by Konica Minolta, Inc.

Specifically, a measurement port of a measuring machine was brought into contact with the glass plate such that external light did not enter the glass plate, light was incident on the glass plate from a specified light source, a spectrum of reflected light from the glass plate was detected by a light receiver, and the brightness L* value was obtained by calculating a L*a*b* color system from the obtained spectrum.

<Surface Roughness>

On the outermost surface of the region having the uneven structure in the glass plate, the roughness curve element average length Rsm, the arithmetic average roughness Ra, the skewness Rsk, the kurtosis Rku, and a maximum cross-sectional height Rt, as indices of the surface roughness, were measured in accordance with JIS B 0601 (2013).

Specifically, an image of the substrate after forming the uneven structure and before forming the antireflection film was captured in a visual field region of 280 μm × 200 μm by using a 50× objective lens by using VK-X3000 manufactured by Keyence Corporation. The obtained result was subjected to plane inclination correction as a whole without using a cutoff, to obtain an image.

For the image, 21 straight lines were defined across the entire width of the image in a horizontal direction as a Y axis at an interval of 10 $\mu$m on the image, Rsm, Ra, Rsk, Rku, and Rt were calculated for the 21 straight lines based on cross-sectional profiles, and the respective average value was defined as Rsm, Ra, Rsk, Rku, and Rt on the outermost surface of the glass plate. In the same manner, as described above, the measurement was performed at arbitrary three positions on the diagonal line of the glass plate, and the average values thereof were defined as the values of Rsm, Ra, Rsk, Rku, and Rt. Note that, although this measurement is performed before the antireflection film is formed, since the antireflection film is formed along the unevenness of the glass plate and does not greatly influence each parameter of the surface roughness, the measurement value can be regarded as a value measured after the formation of the antireflection film.

<Transmission Haze>

The transmission haze on the outermost surface of the region having the uneven structure and the antireflection film in the glass plate was measured by a method in accordance with JIS K 7136 (2000).

Specifically, the glass plate was provided on a light source such that the first main surface side of the glass plate was the light source side, and transmitted light was subjected to measurement from above the glass plate by using a haze meter HZ-1 manufactured by Suga Test Instruments Co., Ltd.

When a direction parallel to the thickness direction of the glass plate was defined as an angle of 0°, light detected within ±2.5° was defined as transmitted light, and light detected less than -2.5° or more than +2.5° was defined as scattered light (transmitted light loss). Then, the ratio of the scattered light to the sum of the transmitted light and the scattered light, that is, the total light transmission amount, was defined as the transmission haze (%).

<Luminous Transmittance of Outermost Surface>

The luminous transmittance measured on the outermost surface of the region having the antireflection film covering the uneven structure on the first main surface side in the glass plate was measured by a method in accordance with JIS Z 8701 (1999).

Specifically, a spectral transmittance was measured by using a spectrophotometer (trade name: Solid-Spec-3700, manufactured by Shimadzu Corporation), and a luminous transmittance, that is, a stimulus value Y defined in JIS Z 8701 (1999) was determined by calculation, which was defined as the above luminous transmittance.

<b * Value of Glass Plate>

The b* value of the glass plate was measured by a method in accordance with JIS Z 8729 (2004).

Specifically, a color index (b* value) defined in JIS Z 8729 (2004) was determined based on a transmission spectrum obtained by measuring the above spectral transmittance. The light source used was a D65 light source.

<Luminous Reflectance of Outermost Surface>

The luminous reflectance measured on the outermost surface of the region having the antireflection film covering the uneven structure on the first main surface side in the glass plate was measured by a method in accordance with JIS Z 8701 (1999).

Specifically, the spectral reflectance of the outermost surface of the region having the antireflection film covering the uneven structure on the first main surface side was measured by using a spectrophotometer (trade name: SolidSpec-3700, manufactured by Shimadzu Corporation), and the luminous reflectance, that is, the stimulus value Y of reflection defined in JIS Z 8701 (1999) was determined by calculation. Note that, the second main surface side of the glass plate was blackened with a lacquer to eliminate back surface reflection.

<Sheet Resistance of Antireflection Film>

The sheet resistance of the antireflection film provided on the first main surface side of the glass plate was measured by a method in accordance with JIS K 6271-6 (2008).

Specifically, a measurement device (device name: Hiresta UP (MCP-HT450 model), manufactured by Mitsubishi Chemical Analytech Co., Ltd.) was used, a probe was brought into contact with a center of the antireflection film, and the sheet resistance of the antireflection film was measured by energizing the probe at 10 V for 10 seconds.

<60° Mirror Surface Glossiness (%)>

The 60° mirror surface glossiness (%) of the outermost surface of the glass plate on the first main surface side was measured by a method in accordance with JIS Z 8741 (1997).

Specifically, the 60° mirror surface glossiness was measured at a substantially central portion in a plane of the region having the uneven structure and the antireflection film formed on the surface of the glass plate on the first main surface side by using an all-in-one gloss meter (Rhopoint IQ, manufactured by Rhopoint Instruments Ltd.). At this time, a black felt was spread on the second main surface side of the glass plate to eliminate back surface reflection of the glass plate.

<Sense of Touch>

Sensory evaluation was performed on the sense of touch in a swipe operation on the outermost surface of the region having the uneven structure and the antireflection film in the glass plate.

Specifically, on the outermost surface, a swipe operation with one finger, and pinch-in and pinch-out as swipe operations with two fingers, were performed. Then, the finger sliding during the swipe operation with one finger and the smallness of the feeling of the finger stopping at the end of the swipe operation with two fingers were evaluated. The panel consisted of 174 persons, each of whom gave a pass/fail evaluation and a score of 0 to 10 to the sense of touch for each glass plate, and the average score was used to a sense of touch rank.

As a result of the sensory evaluation, a sense of touch rank of 2 points or more is determined to be passed, and the higher the sense of touch rank, the more preferred it is.

<<Test Example>>

<Examples 1 to 9>

A glass plate (Dragontrail (registered trademark), manufactured by AGC Inc.) having a thickness of 1.3 mmt was cleaved into a size of 500 mm $\times$ 400 mm by a diamond cutter. A sharp end portion generated by the cleaving was ground with a diamond grindstone having a grain size of No. 400 in accordance with JIS R 6001 (1987) to form a C-chamfered shape.

Next, one main surface (first main surface) of the glass plate was subjected to an antiglare treatment by using a wet blasting method according to the following procedure.

Alumina particles were used as abrasive grains, and a slurry was prepared by dispersing the abrasive grains in water such that the abrasive grain concentration (concentration of the alumina particles) was 12 vol%. The grain size of the alumina particles in accordance with JIS R 6001 (1987) is as shown in Table 1.

The slurry was fed to a blast gun by a pump and sprayed onto the first main surface of the glass plate in a state of being accelerated by compressed air, and the surface was roughened by wet blasting.

The discharge pressure, the spray angle of the slurry with respect to the first main surface, and the number of sweeps in the roughening were as shown in Table 1. In each of Examples, the projection distance was set to 70 mm, and the conveyance speed was set to 20 mm/s.

After the wet blasting, the glass plate was washed with water, and then subjected to an etching treatment with hydrofluoric acid and washed to obtain a glass plate having an uneven structure on the surface of the first main surface. Note that, the concentration of hydrogen fluoride in hydrofluoric acid was set to 5.0 mass%, and the immersion time was adjusted such that the etching amount by hydrofluoric acid was the value shown in Table 1.

Next, an antireflection film was formed on the entire surface of the first main surface having the uneven structure formed as described above.

In Examples 1 and 9, low refractive index layers and high refractive index layers shown below in a total of four were alternately formed by using a magnetron sputtering method to provide an antireflection film. The outermost layer was a $SiO_2$ layer.

- Low refractive index layer: $SiO_2$ layer, having a refractive index of 1.47 at a wavelength of 550 nm
- High refractive index layer: $Nb_2O_5$ layer, having a refractive index of 2.3 at a wavelength of 550 nm

Specifically, the antireflection films in Examples 1 and 9 were formed by the following procedure.

Each layer was formed by sputtering. In the film formation, the conditions were adjusted such that the $Nb_2O_5$ layer had a thickness of 14 mm, the $SiO_2$ layer had a thickness of 38 mm, the $Nb_2O_5$ layer had a thickness of 119 mm, and the $SiO_2$ layer had a thickness of 87 mm in this order.

Each layer was laminated by using a flowing method. During the film formation, for each layer, magnetron sputtering was performed at a pressure of 0.3 Pa, a frequency of 20 kHz, a film formation power of 3.8 W/cm$^2$, and an reverse pulse width of 5 μsec while introducing a mixed gas containing argon gas and 10 vol% of oxygen gas into the chamber, and each layer was laminated on the entire surface of the first main surface having the uneven structure.

In Examples 2 to 8, a total of four layers, i.e., a high refractive index layer (1), a low refractive index layer (1), a high refractive index layer (2), and a low refractive index layer (2) shown below were formed in this order on the formed uneven structure by using a pulse sputtering method to form an antireflection film. The outermost layer is the low refractive index layer (1).

· High refractive index layer (1): Mo-Nb-O layer, having a thickness of 14 nm and a refractive index of 2.1 at a wavelength of 550 nm
· Low refractive index layer (1): SiO$_2$ layer, having a thickness of 35 nm and a refractive index of 1.47 at a wavelength of 550 nm
· High refractive index layer (2): Mo-Nb-O layer, having a thickness of 120 nm and a refractive index of 2.1 at a wavelength of 550 nm
· Low refractive index layer (2): SiO$_2$ layer, having a thickness of 90 nm and a refractive index of 1.47 at a wavelength of 550 nm

Specifically, the antireflection films in Examples 2 to 9 were formed by the following procedure.

Pulse sputtering was performed by using a target obtained by mixing niobium and molybdenum at a weight ratio of 80:20 and sintering the mixture, while introducing a mixed gas containing argon gas and 39 vol% of oxygen gas and maintaining the pressure at 0.3 Pa. The sputtering conditions were a frequency of 20 kHz, a power density of 4.0 W/cm$^2$, and a reverse pulse width of 5 μsec. Accordingly, a Mo-Nb-O layer was formed to a thickness of 14 nm so as to cover the uneven structure in the glass plate. The composition ratio of Mo and Nb in the obtained Mo-Nb-O layer was Mo:Nb = 80:20 (mass%).

Next, pulse sputtering was performed by using a silicon target while introducing a mixed gas containing argon gas and 40 vol% of oxygen gas. The sputtering conditions were a pressure of 0.3 Pa, a frequency of 20 kHz, a power density of 3.8 W/cm$^2$, and a reverse pulse width of 5 μsec. Accordingly, a layer made of silicon oxide (silica (SiO$_2$)) having a thickness of 35 nm was formed.

Next, pulse sputtering was performed by using a target obtained by mixing niobium and molybdenum at a weight ratio of 80:20 and sintering the mixture, while introducing a mixed gas containing argon gas and 10 vol% of oxygen gas and maintaining the pressure at 0.3 Pa. The sputtering conditions were a frequency of 20 kHz, a power density of 4.0 W/cm$^2$, and a reverse pulse width of 5 μsec. Accordingly, a Mo-Nb-O layer was formed to a thickness of 120 nm. The composition ratio of Mo and Nb in the obtained Mo-Nb-O layer was Mo:Nb = 80:20 (mass%).

Subsequently, pulse sputtering was performed by using a silicon target while introducing a mixed gas containing argon gas and 39 vol% of oxygen gas. The sputtering conditions were a pressure of 0.3 Pa, a frequency of 20 kHz, a power density of 3.8 W/cm$^2$, and a reverse pulse width of 5 μsec. Accordingly, a layer made of silicon oxide (silica (SiO$_2$)) having a thickness of 90 nm was formed.

In Examples 1 to 9, an anti finger print film was further formed on the glass plate on which the antireflection film was formed, to cover the entire surface of the antireflection film. The anti finger print film was formed by the following procedure.

As a material for the anti finger print layer, a material for forming a fluorine-containing organosilicon compound film was introduced into a heating container of an anti finger print layer formation chamber. As an anti finger print layer-forming composition, S-550 (manufactured by AGC Inc.) was used.

Next, the glass plate on which the antireflection film was formed was placed in a vacuum chamber, and then the anti finger print layer-forming composition was supplied toward the first main surface to form a film having a thickness of 4 nm.

With the above procedure, glass plates in Examples 1 to 9 were obtained.

<Examples 10 to 16>

In Examples 10 to 15, one main surface (first main surface) of the glass plate was subjected to an antiglare treatment by using a frost method according to the following procedure. In Example 16, no antiglare treatment was performed.

In the antiglare treatment by using the frost method, first, the glass plate was immersed in 5 mass% hydrofluoric acid for 180 seconds to perform a pre-washing treatment. Next, frost processing was performed after washing using pure water and drying.

The frost processing was performed by immersing the glass plate in a mixed solution containing potassium fluoride and hydrogen fluoride at 15°C for 180 seconds. The concentrations of potassium fluoride and hydrogen fluoride in the mixed solution were as shown in Table 2.

Next, washing using pure water, drying, and etching were performed.

The etching was performed by immersing the glass plate in a mixed solution containing hydrogen fluoride and hydrochloric acid at 15°C. In the mixed solution, the concentration of hydrogen fluoride was 10 mass% and the concentration of hydrochloric acid was 4 mass%. The immersion time was adjusted such that the post-etching amount in the etching was the value shown in Table 2.

Thereafter, washing using pure water and drying were performed to obtain a glass plate having an uneven structure on the surface of the first main surface.

Next, an antireflection film was formed on the entire surface of the first main surface having the uneven structure formed as described above in Examples 10 to 15, and on the entire surface of one main surface in Example 16. Specifically, the antireflection film was formed in the same manner as in Examples 2 to 8 for Examples 10 to 12 and in the same manner as in Examples 1 and 9 for Examples 13 to 16.

Next, an anti finger print film was formed on the glass plate on which the antireflection film was formed, to cover the entire surface of the antireflection film in the same manner as in Examples 1 to 9 to obtain glass plates in Examples 10 to 16.

The evaluation results of the obtained glass plates are shown in Tables 1 and 2. In all of the glasses in Examples 1 to 16, the sheet resistance of the antireflection film was $10^4$ $\Omega/\square$ or more.

[Table 1]

Table 1

| | | Example 1 | Example 2 | Example 3 | Example 4 | Example 5 |
|---|---|---|---|---|---|---|
| Uneven structure | Abrasive grain kind | Alumina | Alumina | Alumina | Alumina | Alumina |
| | Abrasive grain size | #4000 | #4000 | #4000 | #4000 | #4000 |
| | Abrasive grain concentration | 12 vol% | 12 vol% | 12 vol% | 12 vol% | 12 vol% |
| | Discharge pressure | 0.3 MPa | 0.3 MPa | 0.3 MPa | 0.3 MPa | 0.3 MPa |
| | Number of pass | 9 | 9 | 9 | 4 | 36 |
| | Gun angle | 60° | 60° | 75° | 75° | 75° |
| | Etching amount | 5 $\mu$m | 5 $\mu$m | 5 $\mu$m | 5 $\mu$m | 5 $\mu$m |
| Anti-reflection film | Configuration | $SiO_2$ /$Nb_2O_5$ | Mo-Nb-O /$SiO_2$ | Mo-Nb-O /$SiO_2$ | Mo-Nb-O /$SiO_2$ | Mo-Nb-O /$SiO_2$ |
| | Luminous reflectance (%) | 0.69 | 0.63 | 0.69 | 0.72 | 0.70 |
| Surface roughness | Ra ($\mu$m) | 0.05 | 0.05 | 0.07 | 0.08 | 0.05 |
| | Rsm ($\mu$m) | 34.68 | 34.68 | 35.50 | 29.97 | 38.18 |
| | Rt ($\mu$m) | 0.56 | 0.56 | 0.65 | 0.76 | 0.66 |
| | Rsk (-) | -2.73 | -2.73 | -2.18 | -2.43 | -2.83 |
| | Rku (-) | 12.40 | 12.40 | 8.63 | 10.37 | 13.05 |
| Clarity index value T | | 0.964 | 0.961 | 0.950 | 0.936 | 0.959 |
| Anti-sparkle index value S | | 0.895 | 0.896 | 0.882 | 0.868 | 0.879 |
| Reflection image diffusiveness index value R | | 0.017 | 0.017 | 0.026 | 0.036 | 0.024 |
| Average dynamic friction coefficient COF | | 0.383 | 0.381 | 0.352 | 0.354 | 0.346 |
| Friction change amount delta | | -0.065 | -0.065 | -0.041 | -0.136 | -0.042 |
| Transmission haze (%) | | 11.60 | 11.56 | 19.46 | 23.85 | 15.41 |
| Brightness L* value (SCE) | | 3.51 | 2.73 | 1.82 | 4.00 | 3.13 |
| 60° mirror surface glossiness (%) | | 107.6 | 70.0 | 54.6 | 46.5 | 57.2 |

(continued)

|  |  | Example 1 | Example 2 | Example 3 | Example 4 | Example 5 |
|---|---|---|---|---|---|---|
| Luminous transmittance (%) | | 94.10 | 54.09 | 54.32 | 53.50 | 54.76 |
| b* value | | -2.20 | 2.51 | 2.45 | 2.39 | 2.38 |
| Sense of touch rank | | 5 | 5 | 8 | 3 | 9 |

|  |  | Example 6 | Example 7 | Example 8 | Example 9 |
|---|---|---|---|---|---|
| Uneven structure | Abrasive grain kind | Alumina | Alumina | Alumina | Alumina |
| | Abrasive grain size | #4000 | #600 | #1500 | #4000 |
| | Abrasive grain concentration | 12 vol% | 12 vol% | 12 vol% | 12 vol% |
| | Discharge pressure | 0.3 MPa | 0.15 MPa | 0.15 MPa | 0.3 MPa |
| | Number of pass | 9 | 9 | 9 | 9 |
| | Gun angle | 90° | 90° | 90° | 75° |
| | Etching amount | 5 $\mu$m | 10 $\mu$m | 10 $\mu$m | 5 $\mu$m |
| Anti-reflection film | Configuration | Mo-Nb-O /SiO$_2$ | Mo-Nb-O /SiO$_2$ | Mo-Nb-O /SiO$_2$ | SiO$_2$ /Nb$_2$O$_5$ |
| | Luminous reflectance (%) | 0.72 | 0.69 | 0.72 | 0.73 |
| Surface roughness | Ra ($\mu$m) | 0.07 | 0.71 | 0.35 | 0.07 |
| | Rsm ($\mu$m) | 26.81 | 40.01 | 25.89 | 35.50 |
| | Rt ($\mu$m) | 0.67 | 4.17 | 2.23 | 0.65 |
| | Rsk (-) | -2.18 | -0.26 | -0.20 | -2.18 |
| | Rku (-) | 8.71 | 2.71 | 2.85 | 8.63 |
| Clarity index value T | | 0.944 | 0.060 | 0.139 | 0.953 |
| Anti-sparkle index value S | | 0.874 | 0.951 | 0.929 | 0.883 |
| Reflection image diffusiveness index value R | | 0.032 | 0.997 | 0.990 | 0.026 |
| Average dynamic friction coefficient COF | | 0.359 | 0.345 | 0.415 | 0.354 |
| Friction change amount delta | | -0.175 | -0.086 | 0.096 | -0.041 |
| Transmission haze (%) | | 20.96 | 85.61 | 73.64 | 19.46 |
| Brightness L* value (SCE) | | 3.70 | 10.39 | 9.15 | 4.95 |
| 60° mirror surface glossiness (%) | | 49.9 | 13.6 | 13.7 | 84.0 |
| Luminous transmittance (%) | | 53.67 | 55.05 | 53.39 | 94.80 |
| b* value | | 2.44 | 2.39 | 2.45 | -2.40 |
| Sense of touch rank | | 2 | 7 | 9 | 7 |

[Table 2]

Table 2

| | | | Example 10 | Example 11 | Example 12 | Example 13 |
|---|---|---|---|---|---|---|
| Uneven structure | Frost processing (mixed solution) | Potassium fluoride | 1.6 mass% | 1.6 mass% | 1.6 mass% | 1.6 mass% |
| | | Hydrogen fluoride | 1.7 mass% | 1.7 mass% | 1.7 mass% | 1.7 mass% |
| | Etching | Post-etching amount | 13 $\mu$m | 9 $\mu$m | 23 $\mu$m | 9 $\mu$m |
| Anti-reflection film | Configuration | | Mo-Nb-O /SiO$_2$ | Mo-Nb-O /SiO$_2$ | Mo-Nb-O /SiO$_2$ | SiO$_2$ /Nb$_2$O$_5$ |
| | Luminous reflectance (%) | | 0.68 | 0.69 | 0.68 | 0.67 |
| Surface roughness | Ra ($\mu$m) | | 0.14 | 0.17 | 0.13 | 0.14 |
| | Rsm ($\mu$m) | | 19.53 | 19.05 | 20.83 | 20.16 |
| | Rt ($\mu$m) | | 1.01 | 1.32 | 0.87 | 1.01 |
| | Rsk (-) | | -0.30 | -0.23 | -0.32 | -0.54 |
| | Rku (-) | | 2.98 | 3.13 | 2.87 | 3.24 |
| Clarity index value T | | | 0.887 | 0.868 | 0.893 | 0.869 |
| Anti-sparkle index value S | | | 0.836 | 0.853 | 0.794 | 0.850 |
| Reflection image diffusiveness index value R | | | 0.115 | 0.134 | 0.112 | 0.134 |
| Average dynamic friction coefficient COF | | | 0.322 | 0.307 | 0.330 | 0.334 |
| Friction change amount delta | | | -0.194 | -0.187 | -0.203 | -0.206 |
| Transmission haze (%) | | | 25.44 | 33.07 | 16.93 | 32.66 |
| Brightness L* value (SCE) | | | 4.16 | 4.95 | 3.28 | 6.74 |
| 60° mirror surface glossiness (%) | | | 16.4 | 12.5 | 36.0 | 19.4 |
| Luminous transmittance (%) | | | 55.41 | 54.39 | 53.97 | 94.69 |
| b* value | | | 2.41 | 2.34 | 2.44 | -2.31 |
| Sense of touch rank | | | 4 | 6 | 3 | 2 |
| | | | Example 14 | Example 15 | Example 16 | |
| Uneven structure | Frost processing (mixed solution) | Potassium fluoride | 1.6 mass% | 1.6 mass% | | |
| | | Hydrogen fluoride | 2.7 mass% | 2.7 mass% | - | |
| | Etching | Post-etching amount | 12 $\mu$m | 40 $\mu$m | | |
| Anti-reflection film | Configuration | | SiO$_2$/Nb$_2$O$_5$ | SiO$_2$/Nb$_2$O$_5$ | SiO$_2$/Nb$_2$O$_5$ | |
| | Luminous reflectance (%) | | 0.68 | 0.70 | 0.68 | |
| Surface roughness | Ra ($\mu$m) | | 0.08 | 0.05 | 0.03 | |
| | Rsm ($\mu$m) | | 18.20 | 17.98 | 29.06 | |
| | Rt ($\mu$m) | | 0.66 | 0.41 | 0.21 | |
| | Rsk (-) | | -0.19 | -0.17 | -0.07 | |
| | Rku (-) | | 3.37 | 3.07 | 2.79 | |
| Clarity index value T | | | 0.972 | 0.970 | 0.982 | |
| Anti-sparkle index value S | | | 0.937 | 0.917 | 0.986 | |
| Reflection image diffusiveness index value R | | | 0.013 | 0.025 | 0.004 | |

(continued)

| | Example 14 | Example 15 | Example 16 |
|---|---|---|---|
| Average dynamic friction coefficient COF | 0.339 | 0.712 | 2.770 |
| Friction change amount delta | -0.214 | -0.335 | -1.800 |
| Transmission haze (%) | 16.50 | 6.72 | 0.15 |
| Brightness L* value (SCE) | 3.95 | 2.76 | 1.75 |
| 60° mirror surface glossiness (%) | 58.5 | 115.0 | 161.0 |
| Luminous transmittance (%) | 94.45 | 95.09 | 95.32 |
| b* value | -2.36 | -2.34 | 0.20 |
| Sense of touch rank | 1 | 0 | 0 |

From the above results, it is found that even when the value of the average dynamic friction coefficient COF is within an appropriate range, the glass plate having a small friction change amount delta has an insufficient sense of touch during the swipe operation. In addition, it is found that when the clarity index value T, the anti-sparkle index value S, and the brightness L* value of the glass plate are set within appropriate ranges, suitable clarity can also be maintained.

The glass plate satisfying such properties correlates with the values of the surface roughness and the transmission haze.

In a method for producing a glass plate in the related art, when an attempt is made to obtain an excellent sense of touch, the transmission haze is increased, and a sufficiently low brightness L* value cannot be realized. However, as a result of studies by the present inventors, it has been found that, by reducing the spray angle of the slurry when the uneven structure is formed by adopting the wet blasting method, both an excellent sense of touch and a small transmission haze can be achieved.

In addition, it is found that the transmission haze correlates with the brightness L* value, and when the transmission haze is large, the brightness L* value also increases, and whiteness occurs on the substrate, but by forming the absorption type antireflection film, even when the transmission haze is large, the substrate can be prevented from being whitish and a sufficiently low brightness L* value can be realized.

Although the preferred embodiments of the present invention have been described in detail above, the present invention is not limited to the specific embodiments described above, and various modifications and changes are possible within the scope of the gist of the present invention as set forth in the claims.

The present application is based on a Japanese Patent Application (Japanese Patent Application No. 2023-106110) filed on June 28, 2023, the content of which is incorporated herein by reference.

INDUSTRIAL APPLICABILITY

When the glass plate according to the present invention is applied to a display device, the sense of touch is excellent while excellent clarity is maintained, and therefore the glass plate can also be suitably used in a display device having a touch panel function.

REFERENCE SIGNS LIST

    50 glass plate
    51 black plate
    52 first main surface
    53 second main surface
    54 display device
    70A, 70B, 70C measurement device
    71 light source
    75 detector (analysis device)
    731 second light
    733 first reflected light
    735 second reflected light
    737 third reflected light

**Claims**

1. A glass plate comprising:

a first main surface; and
a second main surface opposite to the first main surface, wherein
the first main surface has an uneven structure in at least a part thereof,
the glass plate has a clarity index value T of 0.85 or more, an anti-sparkle index value S of 0.80 or more, an average dynamic friction coefficient COF of 0.50 or less, and a friction change amount delta of more than -0.210 on an outermost surface of a region having the uneven structure on a first main surface side,
the glass plate has a brightness L* value of 4.7 or less in a specular component exclude (SCE) method, as measured by using a method in accordance with ASTM E313-73 standard, and
the clarity index value T, the anti-sparkle index value S, the average dynamic friction coefficient COF, and the friction change amount delta are quantified by methods shown below:

clarity index value T: SMS-1000 manufactured by DM&S is used, the glass plate is provided at a position 30 mm away from above a slit-shaped white light source having a length of 40 mm and a width of 0.1 mm such that the first main surface side is a light source side, and luminance on the outermost surface of the region having the uneven structure is measured from a second main surface side of the glass plate, a camera lens used is a lens having a focal distance of 16 mm at a diaphragm of 5.6, and a distance from the outermost surface of the glass plate on the first main surface side to the camera lens is set to 550 mm, and when a direction parallel to a thickness direction of the glass plate is defined as an angle $\theta = 0°$, an average value of luminance in a range of the angle $\theta = 0° \pm 0.1°$ is defined as $T_1$, an average value of luminance in a range of the angle $\theta = 0.7° \pm 0.1°$ is defined as $T_2$, and an average value of luminance in a range of the angle $\theta = -0.7° \pm 0.1°$ is defined as $T_3$, a value calculated according to the following equation (1) is defined as the clarity index value T,

$$\text{Clarity index value } T = 1 - (T_2 + T_3)/(2 \times T_1) \qquad \text{Equation (1)}$$

anti-sparkle index value S: the glass plate is disposed on a display surface side of a display device having a resolution of 264 ppi such that the second main surface is in contact with the display surface side, a sparkle value on the outermost surface of the region having the uneven structure is defined as an anti-sparkle $S_a$, where the sparkle value is determined by image analysis using SMS-1000 manufactured by DM&S provided on the first main surface side of the glass plate in a state where a green monochromatic image composed of RGB (0, 255, 0) is displayed on the display device, a distance d between the SMS-1000 manufactured by DM&S and the outermost surface of the glass plate on the first main surface side is set to 540 mm, and a camera lens used is a lens having a focal distance of 50 mm at a diaphragm of 5.6, in addition, a glass substrate (VRD140 glass, manufactured by AGC Glass Europe) having the same thickness as the glass plate, as a reference sample, is also subjected to image analysis under the same conditions, and the determined sparkle value is defined as an anti-sparkle $S_s$, and a value calculated based on the values of $S_a$ and $S_s$ according to the following equation (2) is defined as the anti-sparkle index value S,

$$\text{Anti-sparkle index value } S = 1 - (S_a/S_s) \qquad \text{Equation (2)}$$

average dynamic friction coefficient COF and friction change amount delta: a dynamic friction coefficient is measured by sliding a pseudo finger at a scanning distance of 50 mm, a load of 100 g, and a scanning speed of 100 mm/sec on the outermost surface of the region having the uneven structure on the first main surface side of the glass plate in an environment of a room temperature of 23°C and a humidity of 21% in a static and dynamic friction measuring machine, a data acquisition frequency is set to 1 kHz, the pseudo finger is made of urethane, and a contact portion with the outermost surface is formed with linear convex portions in a direction perpendicular to a sliding direction at an interval of 0.5 mm in an area of 10 mm × 15 mm, and here, when going back from a time at which the dynamic friction coefficient is at maximum, a time point at which the dynamic friction coefficient is 0 or less for the first time is defined as a movement start time point, and a time point at which the dynamic friction coefficient is 5 or less for the first time after a time point represented by {(the movement start time point) + (0.75 × the scanning distance/the scanning speed)} is defined as a movement end time point, a value calculated according to the following equation (3) is defined as the average dynamic friction coefficient COF, and a value calculated according to the following equation (4) is defined as the friction change amount delta.

Average dynamic friction coefficient COF = average value of dynamic friction coefficients at (intermediate time point between the movement start time point and the movement end time point) $\pm$ 0.2 seconds Equation (3)

Equation (3)

Friction change amount delta = (maximum dynamic friction coefficient after the movement end time point) - (the average dynamic friction coefficient COF) Equation (4)

Equation (4)

2.  The glass plate according to claim 1, wherein

the first main surface further includes an antireflection film on at least a part thereof,
the antireflection film covers at least a part of the uneven structure,
the glass plate has a luminous transmittance of 20% to 85% measured on an outermost surface of a region having the antireflection film on the first main surface side,
the glass plate has a b* value of 5 or less in the region having the antireflection film in a transmitted color under a D65 light source, as measured in accordance with JIS Z 8729 (2004),
the glass plate has a luminous reflectance of 1% or less measured on the outermost surface of the region having the antireflection film covering the uneven structure on the first main surface side, and
the antireflection film has a sheet resistance of $10^4$ $\Omega/\square$ or more.

3.  The glass plate according to claim 2, wherein the glass plate has, on an outermost surface of a region having the uneven structure and the antireflection film on the first main surface side, a transmission haze of 15% or more, as measured by a method in accordance with JIS K 7136 (2000).

4.  The glass plate according to claim 2, wherein

the antireflection film has a laminated structure in which two or more dielectric layers having different refractive indices are alternately laminated,
a main component of each of the dielectric layers in the laminated structure is an oxide of at least one selected from the group consisting of Si, Nb, Ti, Zr, Ta, Al, Sn, and In, or a nitride of at least one of Si and Al, and
in at least one of the dielectric layers, fine particles of at least one selected from the group consisting of Ag, Mo, W, Cu, Au, Pd, Pt, Ir, Ni, Co, Fe, Cr, C, TiC, SiC, TiN, and CrN are dispersed.

5.  The glass plate according to claim 2, wherein

the antireflection film has a laminated structure in which two or more layers having different refractive indexes are alternately laminated,
a main component of at least one layer of the layers in the laminated structure is an oxide of Si,
a main component of at least another layer of the layers in the laminated structure is a mixed oxide containing an oxide of at least one selected from the group A consisting of Mo and W and an oxide of at least one selected from the group B consisting of Si, Nb, Ti, Zr, Ta, Al, Sn, and In, and
a content of elements in the group B is less than 50 mass% with respect to a total of elements in the group A and the elements in the group B in the mixed oxide.

6.  The glass plate according to claim 2, wherein the glass plate has, on an outermost surface of a region having the uneven structure and the antireflection film on the first main surface side, a roughness curve element average length Rsm of less than 26 $\mu$m, an arithmetic average roughness Ra of 0.12 $\mu$m or more, a skewness Rsk of -1 to 1, and a kurtosis Rku of 2 to 4 among surface roughness.

7.  The glass plate according to claim 1, wherein the glass plate has, on the outermost surface of the region having the uneven structure on the first main surface side, a transmission haze of less than 15%, as measured by a method in accordance with JIS K 7136 (2000).

8.  The glass plate according to claim 7, wherein the glass plate has, on the outermost surface of the region having the uneven structure on the first main surface side, a roughness curve element average length Rsm of 26 $\mu$m or more, a

skewness Rsk of -4 to -1.5, and a kurtosis Rku of 5 to 20 among surface roughness.

9. The glass plate according to claim 7, wherein

the first main surface further includes an antireflection film on at least a part thereof,
the antireflection film covers at least a part of the uneven structure,
the antireflection film has a laminated structure in which two or more layers of a low refractive index layer and a high refractive index layer are alternately laminated, and
a main component of the high refractive index layer is at least one selected from the group consisting of SiN, $TiO_2$, $Nb_2O_5$, $Ta_2O_5$, and $ZrO_2$.

10. The glass plate according to any one of claims 1 to 9, further comprising:
a printed layer on at least a part of the second main surface.

11. The glass plate according to any one of claims 1 to 9, wherein the glass plate is a chemically strengthened glass.

12. The glass plate according to any one of claims 1 to 9, which is for use in a cover glass of an in-vehicle display device.

13. An in-vehicle display device comprising:

a cover glass made of the glass plate according to claim 12; and
a display panel.

14. A method for producing a glass plate, which is a method for producing the glass plate according to any one of claims 1 to 9 having the first main surface and the second main surface opposite to the first main surface, the method comprising:
forming the uneven structure on at least a part of the first main surface.

15. The method for producing a glass plate according to claim 14, wherein

the formation of the uneven structure includes immersing the glass plate in a solution containing potassium fluoride and hydrogen fluoride and then immersing the glass plate in a solution containing hydrogen fluoride, and
the method further includes forming an antireflection film to cover at least a part of the uneven structure.

16. The method for producing a glass plate according to claim 14, wherein the formation of the uneven structure includes spraying a slurry onto the first main surface of the glass plate to roughen the first main surface, and then immersing the glass plate in a solution containing hydrogen fluoride to etch the glass plate.

17. The method for producing a glass plate according to claim 16, wherein a spray angle of the slurry is 70° or less with respect to the first main surface.

18. The method for producing a glass plate according to claim 16, wherein

the formation of the uneven structure includes immersing the glass plate in a solution containing potassium fluoride and hydrogen fluoride and then immersing the glass plate in a solution containing hydrogen fluoride, and
the method further includes forming an antireflection film to cover at least a part of the uneven structure.

19. A method comprising selecting the glass plate according to any one of claims 1 to 9.

[FIG. 1]

[FIG. 2]

[FIG. 3]

## INTERNATIONAL SEARCH REPORT

| International application No. |
| --- |
| **PCT/JP2024/021528** |

**A. CLASSIFICATION OF SUBJECT MATTER**

*C03C 23/00*(2006.01)i; *C03C 15/00*(2006.01)i; *C03C 17/34*(2006.01)i; *C03C 19/00*(2006.01)i; *C03C 21/00*(2006.01)i; *G02B 5/02*(2006.01)i; *G09F 9/00*(2006.01)i
FI:   C03C23/00 Z; C03C15/00 Z; C03C19/00 A; C03C21/00 101; C03C17/34 Z; G09F9/00 338; G09F9/00 302; G02B5/02 C

According to International Patent Classification (IPC) or to both national classification and IPC

**B. FIELDS SEARCHED**

Minimum documentation searched (classification system followed by classification symbols)

C03C15/00-23/00; G02B5/02; G09F9/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2018/230079 A1 (AGC INC.) 20 December 2018 (2018-12-20) | 1-19 |
| A | JP 2019-144475 A (AGC INC.) 29 August 2019 (2019-08-29) | 1-19 |
| A | WO 2017/043538 A1 (NIPPON ELECTRIC GLASS CO., LTD.) 16 March 2017 (2017-03-16) | 1-19 |
| P, A | WO 2023/210463 A1 (AGC INC.) 02 November 2023 (2023-11-02) | 1-19 |

☐ Further documents are listed in the continuation of Box C.        ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **14 August 2024** | **27 August 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/021528**

| Patent document cited in search report | | | Publication date (day/month/year) | Patent family member(s) | | | Publication date (day/month/year) |
|---|---|---|---|---|---|---|---|
| WO | 2018/230079 | A1 | 20 December 2018 | US | 2020/0096681 | A1 | |
| | | | | CN | 110753862 | A | |
| JP | 2019-144475 | A | 29 August 2019 | US | 2019/0256410 | A1 | |
| | | | | CN | 110187422 | A | |
| WO | 2017/043538 | A1 | 16 March 2017 | US | 2018/0251398 | A1 | |
| | | | | EP | 3348524 | A1 | |
| | | | | CN | 107683267 | A | |
| | | | | KR | 10-2018-0050606 | A | |
| WO | 2023/210463 | A1 | 02 November 2023 | (Family: none) | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007147343 A
- JP 5867649 B
- JP 7067077 B
- JP 2023106110 A